# EUROPEAN PATENT SPECIFICATION

(11) **EP 4 236 232 B1**
(45) Date of publication and mention of the grant of the patent: **11.11.2026**
(21) Application number: 21881849.0
(22) Date of filing: 28.09.2021
(51) Int. Cl.: H04L 41/0806, H04L 67/10, H04L 67/12, H04L 69/40, H04L 41/08, H04L 41/28

(54) **METHOD FOR CONFIGURING NETWORK PARAMETER OF INTERNET OF THINGS DEVICE, INTERNET OF THINGS DEVICE AND INTERNET OF THINGS SYSTEM**
VERFAHREN ZUR KONFIGURATION VON NETZWERKPARAMETERN EINER INTERNET-DER-DINGE-VORRICHTUNG, INTERNET-DER-DINGE-VORRICHTUNG UND INTERNET-DER-DINGE-SYSTEM
PROCÉDÉ DE CONFIGURATION D'UN PARAMÈTRE DE RÉSEAU D'UN DISPOSITIF DE L'INTERNET DES OBJETS, DISPOSITIF DE L'INTERNET DES OBJETS ET SYSTÈME DE L'INTERNET DES OBJETS

(30) Priority: 21.10.2020 CN 202011131315
(43) Date of publication of application: 30.08.2023
(73) Proprietor: Hangzhou Ezviz Software Co., Ltd., Zhejiang 310051 (CN)
(72) Inventor: SHAN, Zhisheng, Hangzhou, Zhejiang 310051 (CN); JIN, Jingyang, Hangzhou, Zhejiang 310051 (CN); LING, Wei, Hangzhou, Zhejiang 310051 (CN); DU, Weiran, Hangzhou, Zhejiang 310051 (CN); SHAO, Feng, Hangzhou, Zhejiang 310051 (CN); MIAO, Yongzhi, Hangzhou, Zhejiang 310051 (CN)
(74) Representative: Epping - Hermann - Fischer
(86) International application number: PCT/CN2021/121360
(87) International publication number: WO 2022/083431

(56) References cited:
- CN-A- 104 540 237
- CN-A- 104 796 969
- CN-A- 109 600 252
- CN-A- 109 600 252
- CN-A- 111 741 513
- CN-A- 111 741 513
- CN-A- 112 260 871
- US-A1- 2018 062 939
- US-A1- 2021 399 943
- US-B1- 9 913 143
- SETHI ERICSSON M: "Enabling Network Access for IoT devices from the Cloud; draft-st-t2trg-nw-access-01.txt", ENABLING NETWORK ACCESS FOR IOT DEVICES FROM THE CLOUD; DRAFT-ST-T2TRG-NW-ACCESS-01.TXT; INTERNET-DRAFT: NETWORK WORKING GROUP, INTERNET ENGINEERING TASK FORCE, IETF; STANDARDWORKINGDRAFT, INTERNET SOCIETY (ISOC) 4, RUE DES FALAISES CH- 1205 GENEVA,, no. 1, 18 October 2018 (2018-10-18), pages 1 - 11, XP015129125

## Description

The present application claims the priority to a Chinese Patent Application No. 202011131315.1, filed with China National Intellectual Property Administration on October 21, 2020 and entitled "METHOD FOR CONFIGURING NETWORK PARAMETER OF INTERNET OF THINGS DEVICE, INTERNET OF THINGS DEVICE AND INTERNET OF THINGS SYSTEM".

### Technical Field

The present application relates to the technical filed of Internet-of-Things, and in particular to a method for configuring network parameters for an Internet-of-Things device, an Internet-of-Things device and an Internet-of-Things system.

### Background

When Internet-of-Things devices are connected to the network, it is necessary to set the network parameters of the Internet-of-Things devices to be connected to the network one by one. For example, in the smart home system, one of the Internet-of-Things application scenarios, there are usually many types of Internet-of- Things devices such as network cameras, smart door locks, various alarm sensors and lighting devices, etc. When these Internet-of-Things devices are connected to the network, users are required to configure the operation of these Internet-of-Things devices individually.

Taking network cameras as an example, network cameras, also known as IP CAMERA, referred to as IPC, are a combination of network coding modules and analog cameras. They are a new generation of cameras that combine traditional cameras with network technology. IPC can transmit surveillance images to remote devices through the network; remote devices do not need to have professional software, as long as they have a standard web browser, they can get surveillance images.

When the IPC is connected to the network, network parameters is configured for the IPC, in order to enable the IPC to access the network successfully. In the related technology, the network parameters are configured by searching an IPC to be accessed with the wireless signal turned on through an application on the user side such as a cell phone; after an IPC to be accessed is found, the application on the user side interacts with the IPC to be accessed to obtain device information of the IPC to be accessed; after obtaining the device information of the IPC to be accessed, the application on the user side interacts with a network side device to obtain network parameters of the IPC; the application on the user side sends the obtained network parameters to the IPC and connects the IPC to be accessed to the network.

This method requires user participation, and when a large number of IPCs need to access the network, for example, when a large number of IPCs are installed in an industrial park, using the network parameter configuration method of related technologies to individually configure a large number of IPCs will lead to heavy workload and low efficiency.

US 9 913 143 B1 discloses an auto-provisioning device. A provisioning device may be shipped to a client and used to automatically provision an IoT device to join a local network to communicate with a remote service provider. In response to a trigger input, the provisioning device creates a wireless hotspot that is recognizable by an IoT device as a provisioning hotspot. The provisioning device receives a signal from the IoT device indicating that the IoT device is available to be provisioned. The provisioning device obtains provisioning data and transmits the provisioning data to the IoT device. The IoT device uses the provisioning data to connect to a local wireless network and to establish a connection to the remote service provider. The IoT device may then use one or more IoT services of the service provider.

CN104796969A discloses a method and system for networking an IoT device based on an IoT identification code. The method includes: a cloud server on the network side receiving user's registration information for the IoT device, wherein the registration information includes the IoT identification code; determing whether there is a newly accessed IoT device on the basis of the IoT gateway; if the IoT gateway determines there is a newly accessed IoT device, acquiring the IoT recognition code of the new IoT device; the IoT gateway determining whether the new IoT device has been registered based on the obtained IoT identification code of the new IoT device. If the registration has been completed on the cloud server, the new IoT device is accessed to the network.

CN109600252A discloses a method for distributing a device to network. The method includes: searching for the online device: establishing a communication connection with the searched online device; obtaining access information from the online device through the communication connection; using the access information for network distribution.

### Summary

Embodiments of the present application provide a method for configuring network parameters for an Internet-of Things device, an Internet-of Things device, and an Internet-of-Things system, so as to improve the efficiency of Internet-of- Things device accessing the network.

The invention is set out in the appended set of claims.

In the embodiments of the present application, network parameters are configured for Internet-of-Things devices to be accessed via a current online Internet-of-Things device serving as a configuration device, so that the current online Internet-of-Things device and each of the Internet-of-Things devices to be accessed can be used as the configuration device after being connected to the network. In this way, the number of the configuration devices is increased significantly, and thus the number of the Internet-of Things devices to be accessed for configuring network parameters is increased significantly, significantly improving the efficiency for configuring network parameters for a large number of Internet-of-Things devices to be accessed, solving the problem of low efficiency in configuring network parameters for a large number of Internet-of-Things devices to be accessed, and reducing the workload of manual operations.

In addition, in the embodiments of the present application, during the interaction between the current online Internet-of-Things device and the Internet-of Things device to be accessed, the device information of the Internet-of-Things device to be accessed is used as a key to encrypt valid data, avoiding the risk of third-party probing and parsing, and ensuring the security of the Internet-of-Things device under the premise of ensuring functions.

### Brief Description of the Drawings

FIG. 1a is a schematic flow diagram of a method for configuring network parameters for a network camera provided by an embodiment of the present application.
FIG. 1b is a schematic diagram of an overall flow of a method for configuring network parameters for a network camera by a cloud platform provided by an embodiment of the present application.
FIG. 2 is a schematic flow diagram of the interaction between the user side and the cloud platform.
FIG. 3 is a schematic diagram of the interaction between the cloud platform and the current online IPC.
FIG. 4 is a schematic diagram of the interaction between the current online IPC and an IPC to be accessed.
FIG. 5 is a schematic flow diagram of a method for configuring network parameters for an IPC to be accessed when the user side and the current online IPC are in the same wireless network.
FIG. 6 is a schematic diagram of an IPC provided by an embodiment of the present application.
FIG. 7 is a schematic diagram of a user side provided by an embodiment of the present application.

### Detailed Description

In order to make the objects, technical solutions and advantages more clearly, the present application will be further described in detail below with reference to the accompanying drawings.

In an embodiment of the present application, the application on the user side indicates that the current online Internet-of-Things device interacts with an Internet-of-Things device to be accessed, so that the current online Internet-of Things device acts as a configuration device, and the configuration device configures the network parameters for the Internet-of-Things device to be accessed, so that the Internet-of-Things device to be accessed can access the network.

Optionally, in order to provide better business services, the device information of the Internet-of-Things device, and related data are stored in the cloud platform, which is maintained and operated by the cloud platform.

The cloud platform is a network-side device, and the cloud platform may be a local node such as an access point (Access Point, AP) and a router. Online Internet-of-Things devices are Internet-of-Things devices that can access the network.

In order to facilitate the understanding of the technical solutions provided by the embodiments of the present application, the following description is given by taking the Internet-of-Things as a network camera as an example, which is not limiting. The number of current online IPCs may be one or more, and the number of IPCs to be accessed to the network may be one or more. For the sake of description and understanding, a current online IPC as a configuration device is hereafter referred to as the configuration device, and an application (APP) on the user side is referred to as a user side, which is not limiting.

In an embodiment of the present application, the user is a user indicated by the user account logged in by the user side. The current online IPC and the IPC to be accessed of the user refer to the IPCs under the user account, and the IPCs under the user account refer to the IPCs managed by the user. A current online IPC refers to an IPC that has been connected to the network, and an IPC to be accessed refers to an IPC that needs to be connected to the network.

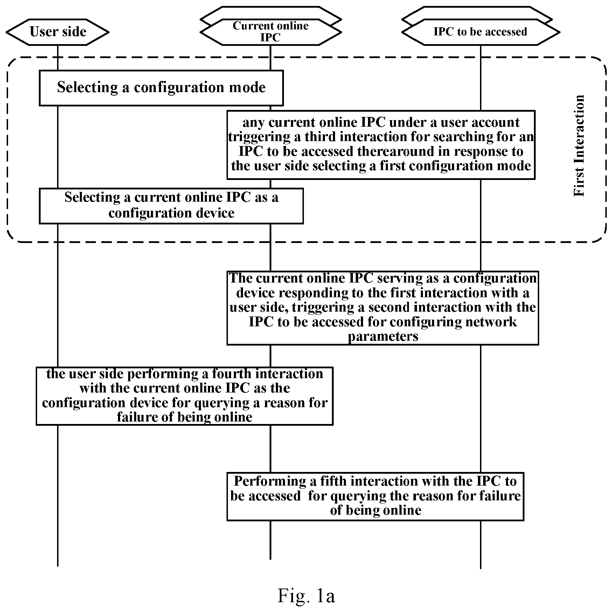

Referring to FIG. 1a, FIG. 1a shows a schematic flow diagram of a method for configuring network parameters for a network camera provided by an embodiment of the present application.

In the first interaction, the user side select a configuration mode and selects a current online IPC as a configuration device. In this first interaction, the cloud platform transmits the interaction information between the user side and the current online IPC for selecting configuration mode, and the interaction information for selecting the current online IPC as the configuration device.

In the first interaction, between the user side and the current online IPC, the cloud platform transmits two types of interaction information, such as first interaction information and second interaction information.

The first interaction information is used for the user side to select a configuration mode; the second interaction information is used for the user side to select a configuration device from the current online IPCs.

In the second interaction, the current online IPC as the configuration device configures network parameters for the IPC to be accessed so that the IPC to be accessed can access the network.

In the second interaction, the configuration device configures the network parameters for the IPC to be accessed so that the IPC to be accessed can access the network.

In a fourth interaction, the user side interacts with the current online IPC as the configuration device to query the reason for online failure. In this fourth interaction, the cloud platform transmits the interaction information for querying reason for failure of being online of the IPC to be accessed between the user side and the current online IPC.

In the fourth interaction, between the user side and the configuration device, the cloud platform transmits interaction information, such as third interaction information.

The third interaction information is used for the user side to query the reason for the failure to make the IPC to be accessed access the network. In an embodiment of the present application, online failure of the IPC to be accessed is the failure to configure the network parameters for the IPC to be accessed.

In the fifth interaction, the current online IPC as the configuration device interacts with the IPC to be accessed for query the reason for failure of being online.

In the fifth interaction, the configuration device interacts with the IPC to be accessed for query the reason for failure of being online.

Wherein, the first interaction further includes: any current online IPC under a user account triggering a third interaction for searching for an IPC to be accessed therearound, in response to the user side selecting a first configuration mode.

If the user side selects the first configuration, for each current online IPC under the user account, the current online IPC triggers a third interaction to search for an IPC to be accessed around the current online IPC.

In an embodiment of the present application, an IPC to be accessed is within the signal coverage of a current online IPC, i.e., the current online IPC can receive the signal sent by the IPC to be accessed, then the IPC to be accessed is around the current online IPC, which can also be understood as the IPC to be accessed is within the search range of the current online IPC.

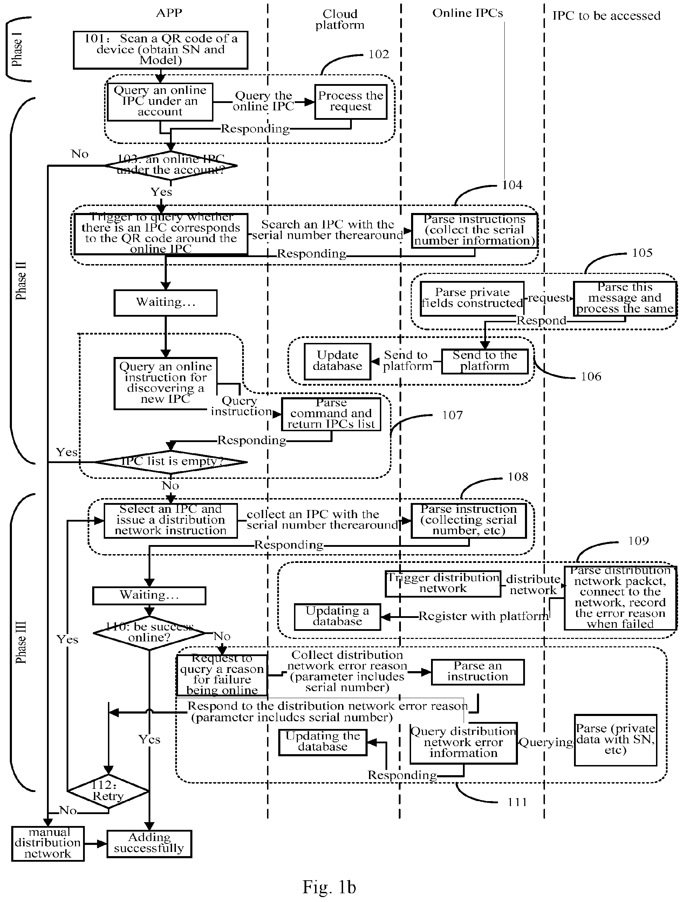

Referring to FIG. 1b, FIG. 1b is a schematic diagram of an overall flow of a method for configuring network parameters for a network camera by a cloud platform provided by an embodiment of the present application. The overall process may include three phases:
Phase I, including step 101, obtaining the information of the IPC to be accessed of the user by the application on the user side itself.

Phase I, the user side obtains the device information of the IPC to be accessed under the user account.

Phase II, including steps 102 to 107, obtaining all current online IPCs of the user by the application on the user side so that the user selects a current online IPC as a configuration device;
Phase II, the user side obtains all current online IPCs under the user account, and selects, from these current online IPCs, a current online IPC as a configuration device.

Phase III, including steps 108 to 112, instructing the configuration device to configure network parameters for an IPC to be accessed by the application on the user side.

Phase III, the user side instructs the configuration device to configure the network parameters for the IPC to be accessed.

The following description is specified in conjunction with Fig. 1b. In the following description, the application on the user side is referred to as the user side.

In step 101, the user side obtains device information of the IPC to be accessed. The device information may include device identification information, for example, a device serial number (SN). The device information may also include device model, etc.

Optionally, the user side may obtain the device information of the IPC to be accessed by scanning a QR code of the IPC to be accessed.

In an embodiment of the present application, the number of IPCs to be accessed may be one or more.

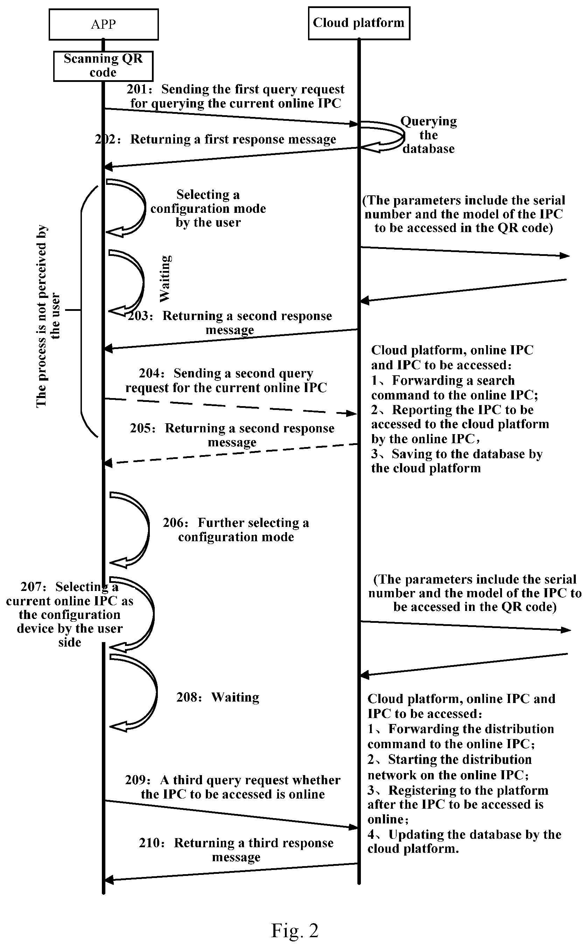

Step 102, the user side performs an a-th interaction with the cloud platform to obtain the current online IPCs belonging to the user, i.e., to obtain all the current online IPCs under the user account. For the a-th interaction, please refer to the related description of FIG. 2.

In an embodiment of the present application, there may be one or more current online IPCs under the user account. Fig. 1b is described by taking the online IPCs indicating that there are multiple online IPCs under the user account as an example, which is not limiting.

Step 103, the user side selects a configuration mode of network parameters based on the returned device information of the online IPCs.

Step 103 may be: the user side determines whether there is a current online IPC under the user account, and determines a configuration mode of the network parameters based on the determination result of whether there is a current online IPC under the user account.

If there is a current online IPC, the first configuration mode for configuring network parameters by the configuration device is selected.

If there is no current online IPC, the second configuration mode for manually configuring network parameters is selected.

When the first configuration mode is selected, proceed to step 104.

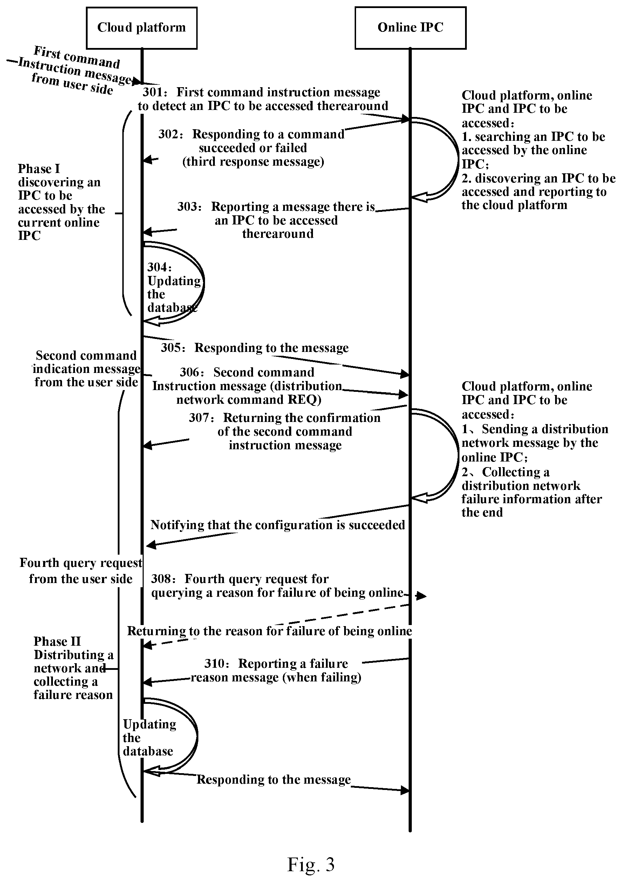

In step 104, the user side performs a b-th interaction with the current online IPC through the cloud platform, so as to instruct the current online IPC to search for an IPC to be accessed around it. For the b-th interaction, please refer to the related description of FIG. 3.

Optionally, the user side obtains the device information of the IPC to be accessed by scanning the QR code of the IPC to be accessed, i.e., the IPC to be accessed is an IPC corresponding to the QR code.

In this case, if the user side determines that there is a current online IPC under the user account, the user side performs the b-th interaction with the current online IPC through the cloud platform to query whether there is an IPC corresponding to the QR code around the current online IPC under the user account..

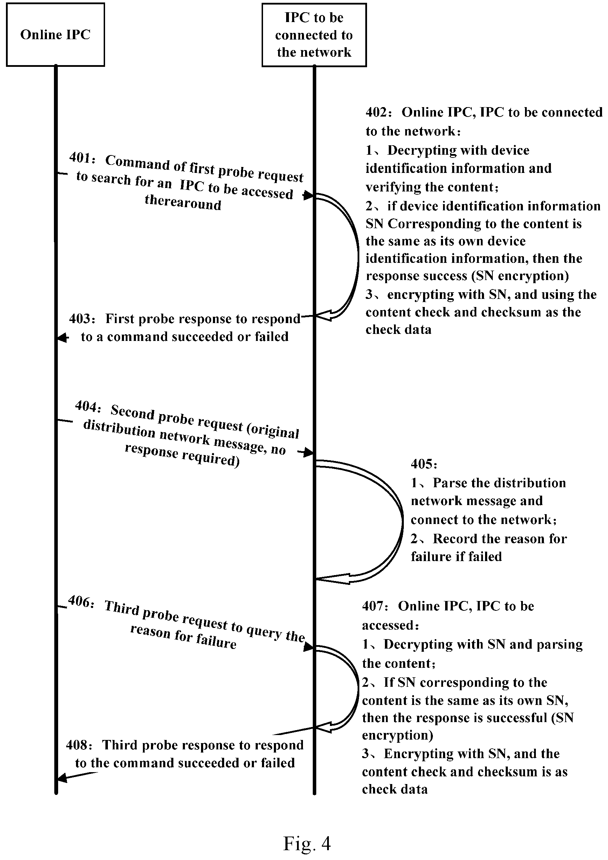

Step 105, the current online IPC performs a c-th interaction with the IPC to be accessed by probing the broadcast signal, so as to search for the IPC to be accessed around it. For the c-th interaction, please refer to the related description of FIG. 4 .

Step 106, the current online IPC performs a d-th interaction with the cloud platform, so as to store the device information of the IPC to be accessed that is found by the current online IPC, and the association relationship between the current online IPC and the found IPC to be accessed in the cloud platform. For example, the current online IPC updates the found device information of the IPC to be accessed, and the association relationship between the current online IPC and the found IPC to be accessed, to the database of the cloud platform. For the d-th interaction, please refer to the relevant description of FIG. 3 .

Step 107, the user side performs an e-th interaction with the cloud platform to select a current online IPC that is used as the configuration device. For the e-th interaction, please refer to the related description of FIG. 2 .

If the current online IPC as the configuration device can be selected, continue to configure network parameters in the first configuration mode, and execute step 108; otherwise, switch to the second configuration mode to configure network parameters.

Step 108, the user side uses the selected current online IPC as the configuration device, and performs a f-th interaction with the configuration device through the cloud platform to instruct the configuration device to configure network parameters for the IPC to be accessed. For the f-th interaction, please refer to the relevant description of FIG. 3 .

Step 109, the configuration device performs a g-th interaction with the IPC to be accessed, so as to configure network parameters for the IPC to be accessed, so that the IPC to be accessed accesses the network. For the g-th interaction, please refer to the related description of FIG. 4.

The IPC to be accessed accesses the network based on the network parameters. For example, the network may be accessed based on the access point (AP) access function provided by the configuration device as a hotspot.

For example, the configuration device can act as a hotspot and provide the AP access function to the IPC to be accessed. The configuration device provides the AP access function, therefore, through the configuration device, the IPC to be accessed can access the network according to the network parameters.

After the IPC to be accessed accesses the network, the IPC performs a h-th interaction with the cloud platform, so as to register on the cloud platform and become an online IPC.

Step 110, the user side performs an i-th interaction with the cloud platform to query whether the IPC to be accessed is successfully online. For the i-th interaction, please refer to the related description of FIG. 2 .

If the online is unsuccessful, step 111 is executed; if the online is successful, it ends.

Step 111, the user side performs a j-th interaction with the configuration device through the cloud platform to obtain the reason for failure of being online via the configuration device.

Step 112, the user side selects a configuration mode based on the failure online reason, i.e., the user side determines whether to re-configure the network parameters in the first configuration mode. For the j-th interaction, please refer to the related description of Figs. 3 and 4.

If the first configuration mode is selected, the process returns to step 108; if the second configuration mode is selected, the configuration is performed manually.

During the above interaction process, with respect to the operation on the user side, steps 105 and 109 are executed in an asynchronous manner, so that the process of configuring the network parameters for the Internet-of-Things device to be accessed to the network by the configuration device can be performed in parallel with the operation on the user side, which is beneficial to improve the configuration efficiency. In addition, it makes the user operation by the user side insensitive to the configuration of network parameters of the Internet-of Things device to be accessed executed asynchronously, providing a better user interface and experience and facilitating the operation of the user.

Through the above interaction process, a configuration device is selected from the current online IPCs, and the configuration device configures network parameters for the IPC to be accessed, so that the IPC to be accessed can access the network. After successfully accessing the network, the IPC to be accessed becomes a current online IPC, the IPC to be accessed can also be used as a configuration device to configure network parameters for another IPC to be accessed, and so on, so that each IPC to be accessed can be used as a configuration device after successfully accessing the network, so that the number of configuration devices is increased significantly, thus significantly improving the efficiency for network parameter configuration for the IPCs to be accessed.

Referring to Fig. 2, Fig. 2 is a schematic flow diagram of the interaction between the user side and the cloud platform, including the a-th interaction, the e-th interaction, and the i-th interaction of the steps shown in Fig. 1b.

### In a-th interaction:

Step 201, considering that the online IPC already belongs to a certain user, the user side interacts with the cloud platform for authentication, and after the authentication is passed, a first query request is sent to the cloud platform to query about the current online IPC.

Step 201 may be: the user side interacts with the cloud platform, so that the cloud platform authenticates the user side; after the authentication is passed, the user side can send a first query request to the cloud platform. The first query request is used to query the current online IPC under the user account.

In an embodiment of the present application, the user side can send information such as user name and password to the cloud platform for the cloud platform to authenticate the user side. In an embodiment of the present application, there is no specific limitation on the way of authentication.

Step 202: In response to the first query request, the cloud platform queries the database and returns to the user side a first response message carrying device information of all current online IPCs.

The database is used to store the device information of the current online IPCs under different user accounts.

Step 202 may be: the cloud platform receives a first query request sent by the user side, queries the database for the device information of the current online IPCs under the user account according to the first query request, and returns a first response message to the user side. The first response message includes the queried device information of all current online IPCs.

After the user side selects the first configuration mode based on the returned device information of the current online IPC, the user side sends a first command instruction message to the current online IPC via the cloud platform to search an IPC to be accessed therearound, the first command instruction message carries the device information of the IPC to be accessed obtained in step 101. The first command instruction message is the search command.

The user side may wait for the current online IPC to return the search result in a load effect manner. The search result includes the device information of the IPC to be accessed around this current online IPC. During the waiting process on the user side, the cloud platform, the current online IPC, and the IPC to be accessed perform the b-th interaction, the c-th interaction, and the d-th interaction.

In the e-th interaction, this can be achieved in two implementations:
In one implementation, step 203, after receiving the search result reported by the current online IPC, the cloud platform carries the device information of the current online IPCs, and the IPCs to be accessed within its search range in a second response message and sends it to the user side, for the user to select a current online IPC to participate in the network parameter configuration.

Step 203 can be: for each current online IPC, the cloud platform receives the search result reported by the current online IPC and sends a second response message to the user side, the second response message carries the device information of this current online IPC and the device information of the IPCs to be accessed around this current online IPC. In this way, the user side can determine the first type of IPC based on the device information of IPCs to be accessed around each current online IPC, so that the first type of IPC can participate in the network parameter configuration.

In the second implementation, step 204, the cloud platform receives a second query request from the user side to query the device information of the current online IPCs that can participate in the network parameter configuration; step 205, in response to this second query request, the device information of all the current online IPCs, and the IPCs to be accessed within its search range is carried in the second response message and sent to the user side.

Step 204 can be: the user side sends a second query request to the cloud platform, and the second query request is used to query the device information of the current online IPCs that can participate in the network parameter configuration. Step 205 can be: the cloud platform parses the second query request and sends a second response message to the user side. The second response message carries a list of current online IPCs.

The second query request may be understood as an online instruction for querying and discovering a new IPC.

Optionally, the second response message may also carry a configuration order between the current online IPC and the IPC devices to be accessed. The configuration order is used to indicate: among all IPCs to be accessed found by the current online IPC, the order in which the network parameters of the IPCs to be accessed are configured by the current online IPC; or, the configuration order is used to indicate: among all IPCs to be accessed found by the current online IPC, the order in which the network parameters of the IPCs to be accessed are configured by the current online IPC.

Step 206, the user side determines whether there is a current online IPC based on the information in the second response message, and if there is a current online IPC, continues to configure the network parameters in the first configuration mode and performs step 207; otherwise, switches to configure the network parameters in the second configuration mode.

Step 206 may be: the user side determines whether the current online IPC list carried by the second response message is empty. If yes, it switches to configure the network parameters in the second configuration mode; if not, it continues to configure the network parameters in the first configuration mode and performs step 207.

Step 207, the user side selects a current online IPC participating in the network parameters configuration as the configuration device, and sends a second command instruction message to the configuration device via the cloud platform for configuring the IPC to be accessed, the second command instruction message carries the device information of the IPC to be accessed.

Wherein, the second command instruction message can be understood as a distribution network request (REQ). The user side selects the current online IPC participating in the network parameter configuration as the configuration device and sends the second command instruction message to the configuration device via the cloud platform.

Optionally, the user side selects the current online IPC as the configuration device for the IPC devices to be accessed based on the configuration order between the current online IPC and the IPC devices to be accessed.

Step 208, the user side waits for the configuration device to complete the configuration of the network parameters of the IPC to be accessed by the configuration device in a loading effect manner. During the waiting process on the user side, the cloud platform, the current online IPC and the IPC to be accessed perform the f-th interaction, the g-th interaction and the h-th interaction.

### In the i-th interaction:

Step 209, the user side sends a third query request to the cloud platform to query whether the IPC to be accessed is online or not.

Step 209 may be: the user side sends a third query request to the cloud platform, and the third query request is used to query whether the IPC to be accessed is online.

Step 210, the cloud platform returns a query result to the user side in response to the third query request.

The query result may include a successful online access of the IPC to be accessed and a failed online access of the IPC to be accessed.

Referring to FIG. 3, FIG. 3 is a schematic diagram of the interaction between the cloud platform and the current online IPC, including the b-th interaction, the d-th interaction, the f-th interaction, and the j-th interaction of the steps in FIG. 1b, wherein the b-th interaction and the d-th interaction are stage 1, i.e., the current online IPC searches for an IPC to be accessed. The f-th interaction and the j-th interaction are the second phase, i.e., the current online IPC as the configuration device configures the network parameters and the failure reason feedback phase.

### In b-th interaction:

Step 301, the cloud platform sends a first command instruction message from the user side to the current online IPC, the first command instruction message carries device information of the device to be accessed IPC.

Step 302, the current online IPC parses the first command instruction message to obtain the device information of the IPC to be accessed, and returns a third response message to the user side via the cloud platform in response to the first command instruction message to notify the user side that the first command instruction message has been successfully parsed or failed.

In the case that the first command instruction message has been successfully parsed, after an IPC to be accessed is found by the current online IPC, i.e., after completing the processing of the c-th interaction, the d-th interaction is executed.

### In d-th interaction:

Step 303, the current online IPC sends the device information of the found IPC to be accessed to the cloud platform, reporting the device information of the found IPC to be accessed.

Optionally, the current online IPC may also send to the cloud platform the configuration order between the current online IPC and the respective IPC devices to be accessed.

Step 304, the cloud platform adds the association relationship between the current online IPC under the user account and the device information of the IPCs to be accessed found by the current online IPC based on the reported information of the current online IPC, and adds the device information of the found IPCs to be accessed under the user account to update the database in the user account.

Wherein, the reported information may include: the device information of the IPC to be accessed found by the current online IPC, and the configuration order between the current online IPC and the respective IPC devices to be accessed, etc.

Step 305, the cloud platform feeds back the confirmation of the reported information to the current online IPC.

### In the f-th interaction:

Step 306, the cloud platform sends a second command instruction message from the user side to the current online IPC as the configuration device to trigger the configuration device to configure network parameters for the IPC to be accessed, the second command instruction message carries the device information of the IPC to be accessed.

Step 307, the current online IPC as the configuration device (referred to as the configuration device) parses the second command instruction message to obtain the device information of the IPC to be accessed, and returns an acknowledgement of the second command instruction message to the cloud platform.

Optionally, after the current online IPC (referred to as the configuration device) as the configuration device completes the network parameters configuration of the IPC of the IPC to be accessed, the cloud platform notifies the user side that the network parameters configuration has been completed.

In an embodiment of the present application, the configuration device can send a distribution network message to the IPC to be accessed, which carries the network parameters needed by the IPC to be accessed. The IPC to be accessed is configured to access the network based on the network parameters carried in the distribution network message. When the configuration of network parameters for the IPC to be accessed has been completed, the network parameters of the IPC to be accessed are successfully configured, and the configuration device notifies the user side through the cloud platform that the configuration of network parameters has been completed. If the configuration of network parameters for the IPC to be accessed has not been completed, the configuration of network parameters for the IPC to be accessed fails and the configuration device can collect information about the reasons for the configuration failure.

In the j-th interaction, this can be achieved in two implementations:
In a first implementation, step 308, the cloud platform sends a fourth query request from the user side for querying the reason for unsuccessful online to the configuration device (i.e., the current online IPC), the fourth query request carries the device information of the IPC to be accessed.

Step 308 can be: The cloud platform sends the fourth query request from the user side to the configuration device, which is used to query the reason why the IPC to be accessed is online unsuccessfully. An unsuccessful online means that the network parameters configuration fails

Step 309: The configuration device parses the fourth query request to obtain the device information of the IPC to be accessed, queries the reason for the unsuccessful online, returns the reason for the unsuccessful online to the user side through the cloud platform, and stores the reason for the unsuccessful online in the cloud platform.

Step 309 may be: the configuration device parses the fourth query request to obtain the device information of the IPC to be accessed; after that, the configuration device queries the reason for the unsuccessful online of the IPC to be accessed based on the device information of the IPC to be accessed, returns the reason for the unsuccessful online of the IPC to be accessed to the user side via the cloud platform, and updates the reason for the unsuccessful online of the IPC to be accessed in the cloud platform's database.

In a second implementation, step 310, when the configuration device fails to configure network parameters for the IPC to be accessed, it notifies the user side through the cloud platform about an IPC to be accessed that fails to configure, and configuration failure reasons, and reports and stores the IPC to be accessed that fails to configure, and configuration failure reasons.

Step 310 may be: when the configuration device fails to configure network parameters of the IPC to be accessed, the configuration device notifies the user side via the cloud platform that an IPC to be accessed that fails to configure, and configuration failure reasons, and updates the IPC to be accessed that fails to configure, and configuration failure reasons to the database of the cloud platform.

Optionally, when the cloud platform completes the update of the database based on the reported information, it returns a confirmation message to the configuration device. Wherein, the reported information may include: the IPC to be accessed, and configuration failure reasons.

Referring to Fig. 4, Fig. 4 is a schematic diagram of the interaction between the current online IPC and an IPC to be accessed, including the c-th interaction, the g-th interaction, and the j-th interaction of the steps shown in Fig. 1b.

### In c-th interaction:

Step 401, the current online IPC receives a first command instruction message and, after parsing the first command instruction message, sends a first probe request (Probe req) to search for an IPC to be accessed around the current online IPC, the first probe request may be a new radio broadcast signal, and the valid value fields in that first probe request may include encryption feature information and device information of the IPC to be accessed. The valid value fields are private fields.

Step 402, after the IPC to be accessed receives the first probe request, it parses the first probe request, decrypts the valid value fields in the first probe request with the device identification information in its device information, and checks and verifies the data content (net load) in the valid value fields.

Wherein the device identification information may include SN and model number, etc.

In an embodiment of the present application, if the data content in the valid value fields in the first probe request is the device identification information of the IPC to be accessed, the verification is successful; otherwise, the verification fails.

Step 403, when the IPC to be accessed successfully verifies the data content in the valid data fields, in response to the first probe request, the first probe response (Probe resp) of the first probe request is returned to the current online IPC, so that the current online IPC obtains the device information of the found IPCs to be accessed.

When the IPC to be accessed fails to verify the data content in the valid value fields, it may not process it, or it may return the first probe response of the first probe request to the current online IPC to notify the current online IPC that the search has failed.

The first probe response can be a new radio broadcast signal, and the valid value fields in the first probe response can include encryption feature information and device information of the IPC to be accessed; the data content (net load) in the valid value fields is encrypted by the device identification information of the IPC to be accessed, and the checksum of the data content is carried in the valid value fields as check data.

Since the same IPC to be accessed may be found by multiple current online IPCs, or a current online IPC can search multiple IPCs to be accessed, in order to match a configuration device with the better signal for each IPC to be accessed for network parameters configuration, optionally, the matching degree of the configuration device and the IPCs to be accessed are sorted according to the probing signal strength, respectively. For example:
the current online IPC sorts the found IPCs to be accessed according to the first probe response signal strength to obtain the configuration order between the current online IPC and the respective IPC to be accessed found;
alternatively,
the IPC to be accessed sorts the current online IPCs according to the first probe request signal strength to obtain the configuration order between the IPC to be accessed and the respective current online IPCs, and carries the configuration order in the first probe response signal, and returns to each current online IPC.

### In g-th interaction:

Step 404, the current online IPC as the configuration device receives the second command instruction message, parses the second command instruction message, and sends a second probe request carrying the network parameters, and the device information of the IPC to be accessed, to configure the network parameters for the IPC to be accessed.

The second probe request may be an new radio broadcast signal, and the valid value fields in the second probe request may include encryption feature information, device information of the IPC to be accessed, and network parameters. The second probe request is an original distribution network message, and the IPC to be accessed may not respond to the configuration device.

Step 405, after receiving the second probe request, the IPC to be accessed network parses the valid value fields in the second probe request, obtains the network parameters by decryption, and accesses the network according to the network parameters; when the IPC to be accessed successfully accesses the network, it registers with the cloud platform to update the database of the user account and becomes a current online IPC under the user account.

When the IPC to be accessed fails to access the network, i.e., the network parameters configuration fails, the IPC to be accessed records the reasons for the network parameters configuration failure, e.g., the decryption is unsuccessful, or the network cannot be accessed, etc.

### In the j-th interaction:

Step 406, the current online IPC as the configuration device receives a fourth query request from the user side and sends a third probe request carrying device information of the IPC to be accessed. The third probe request may be a new radio broadcast signal, and the valid value fields in the third probe request may include encryption feature information, and device information of the IPC to be accessed.

The third probe request is used to query the reason for the failure of the network parameters configuration.

Step 407, after the IPC to be accessed receives the third probe request, it parses the third probe request, decrypts the valid value fields in the third probe request with the device identification information in its device information, and checks and verifies the data content (net load) in the valid data fields.

In an embodiment of the present application, if the data content in the valid data fields in the third probe request is the device identification information of the IPC to be accessed, the verification is successful; otherwise, the verification fails.

Step 408, when the IPC to be accessed successfully verifies the data content in the valid data fields, in response to the third probe request, it returns the third probe response of the third probe request to the current online IPC.

The third probe response can be a new radio broadcast signal carrying the device information of the IPC to be accessed and the failure reason, where the valid value fields in the probe response of the third probe request can include the encryption feature information, the device information of the IPC to be accessed, and the failure reason. The data content (net load) in the valid value fields of the third probe response is encrypted by the device identification information of the IPC to be accessed, and the checksum of the data content is carried in the valid value fields as check data.

When IPC to be accessed fails to verify the data content in the valid data, it may not process it, or it may return a third probe response of a third probe request to the current online IPC to notify the current online IPC, i.e. the configuration device corresponding to this IPC to be accessed.

During the interaction between the current online IPC and the IPC to be accessed, only the current online IPC and the IPC to be accessed under the authenticated user account can be configured with network parameters. Since the probe request and probe response can be new radio broadcast signals, the probe request and probe response are encrypted, for example, using AES-128-CFB as the encryption algorithm for encryption, and the data content contains private data such as device identification information, which ensures that IPCs that do not match the private data will not correctly decrypt the data content, avoiding the risk of data content leakage.

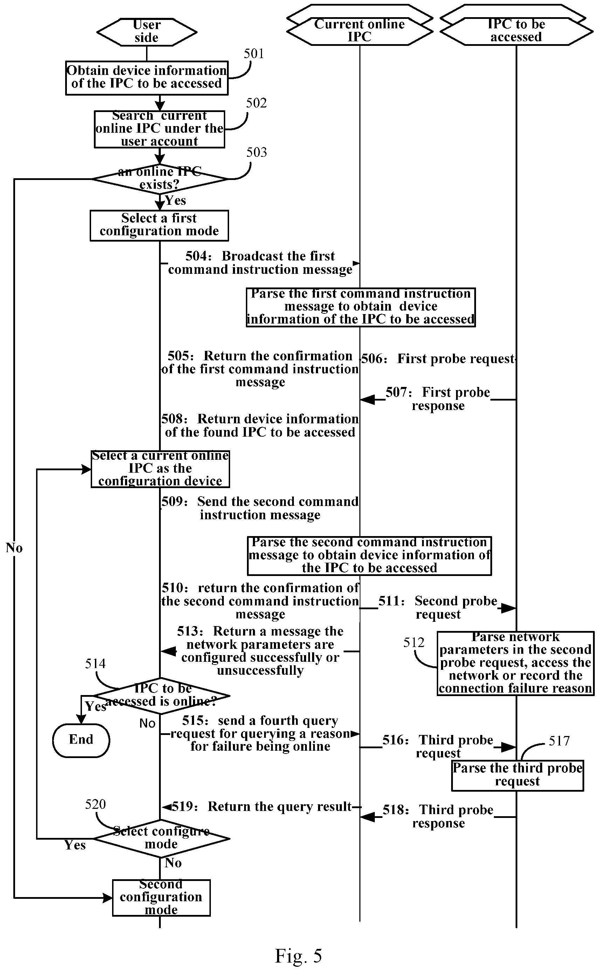

Referring to FIG. 5, FIG. 5 is a schematic flow diagram of a method for configuring network parameters for an IPC to be accessed when the user side and the current online IPC are in the same wireless network. In an embodiment of the present application, the user side and the current online IPC are in the same LAN, and the user side and the current online IPC can interact directly through a local node (e.g., AP or router) in the network, which is not shown in FIG. 5. In an embodiment of the present application, the network parameters configuration of the IPC to be accessed is processed as follows.

Step 501, the user side obtains device information of an IPC to be accessed. Wherein, the device information may include a device identification, for example, a device serial number; the device information may also include a device model.

Step 502, the user side, after the authentication is passed, searches current online IPCs under the user account to obtain device information of all the current online IPCs in the same network.

Step 503, the user side selects a configuration mode for configuring network parameters based on the device information of the current online IPCs.

Step 503 may be: determine whether a current online IPC is found in step 502. If a current online IPC is found, it is determined that there is a current online IPC in the same wireless network; otherwise there is no current online IPC in the same wireless network.

If there is a current online IPC, the first configuration mode for configuring the network parameters by the configuration device is selected; if there is no current online IPC, the second configuration mode for manually configuring network parameters is selected.

When the first configuration mode is selected:
Step 504, the user side broadcasts a first command instruction message to the current online IPC to instruct the current online IPC to search for an IPC to be accessed therearound, the first command instruction message carrying device information of the IPC to be accessed.

Step 505, the current online IPC parses the first command instruction message to obtain the device information of the IPC to be accessed, and returns an acknowledgement (which may also be referred to as a third response message) in response to the first command instruction message to notify the user side that the first command instruction message has been successfully parsed.

Steps 506~507, the current online IPC searches for the IPC to be accessed in response to the first command instruction message, and the specific process is the same as steps 402~403.

Step 508, the current online IPC returns the device information of IPCs to be accessed to the user side. Optionally, the returned device information of the IPCs to be accessed is arranged according to the probing signal strength, so that the user side selects a current online IPC from all the current online IPCs found to serve as the configuration device.

Step 509, the user terminal selects a current online IPC as the configuration device, and sends a second command instruction message to the current online IPC as the configuration device to trigger the configuration device to configure the network parameters for the IPC to be accessed, the second command instruction message carrying the device information of the IPC to be accessed.

Step 510, the current online IPC as the configuration device (referred to as the configuration device) parses the second command instruction message to obtain the device information of the IPC to be accessed, and returns an acknowledgement of the second command instruction message to the user side.

Steps 511 to 512, the current online IPC as the configuration device configures the network parameters for the IPC to be accessed in response to the second command instruction message, so that the IPC to be accessed accesses the network according to the network parameters, and registers with a local node (e.g., an AP or a router) to become a current online IPC.

Wherein, the local node can be understood as the cloud platform.

The specific process is the same as steps 404~405.

Step 513, after the current online IPC as the configuration device configuring network parameters, it feeds back to the user side a message of successful or failure network parameters configuration, and the message may carry the reason for the failure configuration.

Step 514, the user side searches for the current online IPC under the user account to query whether the IPC to be accessed is online successfully.

If online is unsuccessful, step 515 is executed.

If online is successful, it ends.

Step 515, the user side sends a fourth query request for querying the unsuccessful online reason to the current online IPC as the configuration device, the fourth query request carries the device information of the IPC to be accessed.

Steps 516 to 518, the current online IPC as the configuration device, in response to the fourth query request, queries the IPC to be accessed for the reason of configuration failure, and the specific process is the same as that of steps 406 to 408 .

Step 519, the current online IPC as the configuration device returns a query result to the user side.

The query result includes the reason for the configuration failure of the IPC to be accessed.

Step 520, the user side selects a configuration mode based on the reason for the unsuccessful online IPC to be accessed.

If the first configuration is selected, go back to step 509;

If the second configuration is selected, the configuration is performed according to the manual method.

In an embodiment of the present application, the current online IPC as a configuration device in the same network configures the network parameters of the IPCs to be accessed, solving the problem of network parameters configuration and network access of multiple IPCs to be accessed, reducing the workload of the user and improving the efficiency of the IPCs to be accessed accessing the network. In addition, an embodiment of the present application uses the private data (e.g., device identification information) associated with the IPCs to be accessed as the encryption key, increasing the security of the configuration process and effectively preventing leakage of sensitive data.

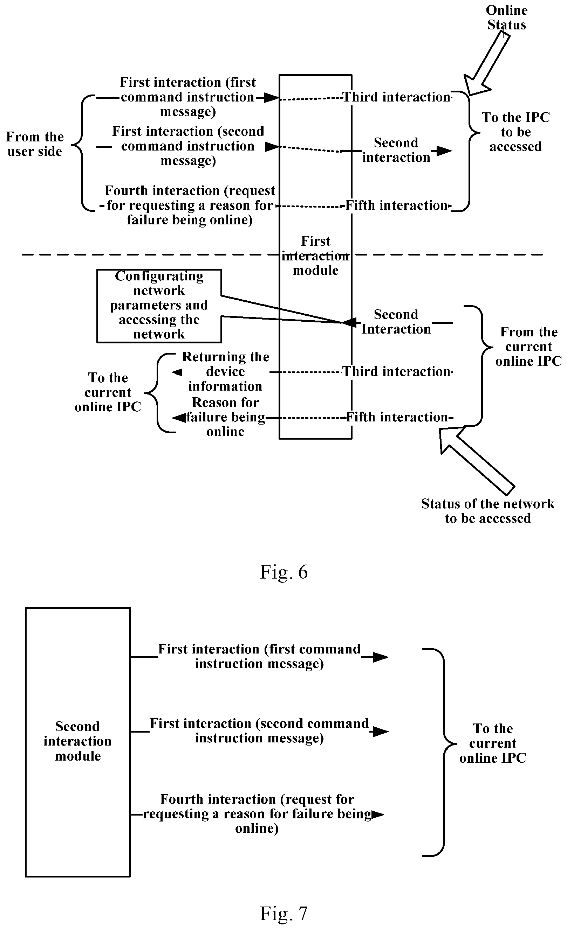

Referring to Fig. 6, FIG. 6 is a schematic diagram of an IPC provided by an embodiment of the present application. The IPC comprises:
a first interaction module for triggering a second interaction with an IPC to be accessed for configuring network parameters, in response to the first interaction with a user side in the online state of the IPC so that the IPC to be accessed can access the network.
wherein the first interaction at least comprises: receiving a second command instruction message from the user side, the second command instruction message carrying device information of the IPC to be accessed.
wherein the second interaction at least comprises: configuring network parameters for the device information of the IPC to be accessed, in response to the second command instruction message.

When the IPC is in a state to be accessed, in response to the second interaction triggered by the current online IPC as a configuration device, configuring the network parameters according to the network parameters sent by the current online IPC as the configuration device, and accessing the network.

Optionally, the first interaction module may further be used to:
trigger, when the IPC is online, a third interaction for searching for an IPC to be accessed therearound in response to the user side selecting a first configuration mode; and trigger a fifth interaction for an reason for failure of being online query with the IPC to be accessed, in response to a fourth interaction with the user side for querying reason for failure of being online.

When this IPC is to be accessed, in response to the third interaction triggered by any current online IPC under the user account to search for an IPC to be accessed therearound, the device information thereof is returned to the current online IPC; in response to the fifth interaction triggered by the current online IPC as the configuration device for querying reason for failure of being online, the reason for failure of being online is returned to the current online IPC as the configuration device.

The IPC receives a first command instruction message from the user side and, in response to the first command instruction message, triggers a third interaction to search for an IPC to be accessed therearound. The first command instruction message carries device information of the IPC to be accessed.

Referring to FIG. 7, FIG. 7 is a schematic diagram of a user terminal provided by an embodiment of the present application. The user terminal is a terminal for configuring network parameters for an Internet-of-Things device. The user terminal includes:
a second interaction module, performs the first interaction with a current online IPC;
wherein the first interaction at least comprises: sending a second command instruction message to a current online IPC as a configuration device, the second command instruction message carrying device information of the IPC to be accessed to trigger a second interaction between the current online IPC as a configuration device and the IPC to be accessed for configuring network parameters, such that the current online IPC as the configuration device, in response to the second command instruction message, configures the network parameters for the device information of the IPC to be accessed.

Optionally, the second interaction module may further be used for:
selecting a first configuration mode based on the found current online IPC under the user account and sending a first command instruction message to the current online IPC to trigger a third interaction for the current online IPC searching for an IPC to be accessed therearound;
selecting a current online IPC as the configuration device based on the device information of the found IPCs to be accessed obtained by the current online IPC through the third interaction;
querying whether the IPC to be accessed is online, so that when the IPC to be accessed fails to be online, the IPC to be accessed returns to the current online IPC as the configuration device the unsuccessful online reason.

An embodiment of the present application further provides an IPC, the IPC comprising a memory and a processor, the memory having stored therein computer programs which, when executed by the processor, cause the processor to carry out the method for configuring network parameters for any of the Internet-of Things devices described in the embodiments when executed.

An embodiment of the present application further provides a user side, the user side comprising a memory and a processor, the memory having stored therein computer programs and the processor is configured to carry out the following steps of:
performing a first interaction with a current online IPC;
wherein the first interaction at least comprises: sending a second command instruction message to the current online IPC as a configuration device, the second command instruction message being used to: instruct the current online IPC as a configuration device to configure network parameters for the IPC to be accessed; the second command instruction message carrying device information of the IPC to be accessed to trigger the second interaction between the current online IPC as a configuration device and the IPC to be accessed for configuring network parameters, such that the current online IPC as the configuration device configures network parameters for the device information of the IPC to be accessed in response to the second command instruction message.

The memory may include a random access memory (RAM), and may also include a non-volatile memory (NVM), such as at least one disk memory. Optionally, the memory may also be at least one storage device located away from the aforementioned processor.

The aforementioned processor may be a general-purpose processor, including a central processing unit (CPU), a network processor (NP), etc.; it may also be a digital signal processing (DSP), an application specific integrated circuit (ASIC), a field-programmable gate array (FPGA) or other programmable logic device, discrete gate or transistor logic device, discrete hardware component.

An embodiment of the present application further provides a computer readable storage medium, the storage medium having computer programs stored therein, when executed by a processor, cause the processor to carry out the method for configuring network parameters for any of the Internet-of-Things devices described in the embodiments.

An embodiment of the present application further provides a computer program, when executed by a processor, cause the processor to carry out the method for configuring network parameters for any of the Internet-of-Things devices described in the Examples.

An embodiment of the present application further provides an Internet-of-Things system comprising at least one Internet-of-Things device, the Internet-of-Things device being configured to carry out the method for configuring network parameters for any of the Internet-of-Things devices as described above.

Optionally, the Internet-of-Things system may further comprise at least one terminal for configuring network parameters for the Internet-of-Things device.

The terminal comprises a memory and a processor, the memory having stored therein computer programs which, when executed by the processor, cause the processor to carry out the following steps of:
performing a first interaction with a current online Internet-of-Things device
wherein the first interaction at least comprises: sending a second command instruction message to the current online Internet-of-Things device serving as a configuration device, the second command instruction message being used to: instruct the current online Internet-of-Things device serving as a configuration device to configuring network parameters for the Internet-of-Things device to be accessed; the second command instruction message carrying device information of the Internet-of-Things device to be accessed to trigger a current online Internet-of-Things device as a configuration device to configure network parameters for the Internet-of-Things device to be accessed, such that the current online Internet-of Things device as configuration device configures network parameters for the device information of the Internet-of-Things device to be accessed in response to the second command instruction message.

Optionally, the Internet-of-Things system may further comprise: a cloud platform for operating and maintaining the Internet-of-Things devices in the Internet-of-Things system, the cloud platform being configured to transmit interaction information for the first interaction between the terminal and the current online Internet-of-Things device;
wherein the interaction information comprises: interaction information for selecting a configuration mode, and interaction information for selecting a current online Internet-of-Things device serving as a configuration device.

The device information of the current online Internet-of-Things device is stored in the cloud platform.

For the device/network side device/storage medium embodiment, the description is relatively simple as it is substantially similar to the method embodiment, and it is sufficient to refer to the partial description of the method embodiment where relevant.

In this document, relationship terms such as first and second are used only to distinguish one entity or operation from another, and do not necessarily require or imply any such actual relationship or order between these entities or operations. Further, the terms "includes," "comprises," or any other variation thereof are intended to cover non-exclusive inclusion, such that a process, method, article, or apparatus that includes a set of elements includes not only those elements, but also other elements not expressly listed, or that also includes a process, method, article, or apparatus that is intended to be used for the purpose of the process, method, article, or apparatus. elements, or elements that are inherent to such a process, method, article, or apparatus. Without further limitation, the elements defined by the statement "including a ......" do not preclude the existence of additional identical elements in the process, method, article, or apparatus that include the elements.

## Claims

1. A method for configuring network parameters for an Internet-of Things device, wherein the method comprises:
a current online Internet-of Things device serving as a configuration device responding to a first interaction with a user side, triggering a second interaction with an Internet-of-Things device to be accessed for configuring the network parameters;
wherein the first interaction at least comprises: receiving a second command instruction message from the user side, the second command instruction message instructs the current online Internet-of Things device serving as the configuration device to configure the network parameters for the Internet-of-Things device to be accessed; wherein the second command instruction message carries device information of the Internet-of-Things device to be accessed;
the second interaction at least comprises: configuring, in response to the second command instruction message, the network parameters for the device information of the Internet-of-Things device to be accessed,
wherein the current online Internet-of Things device serving as the configuration device responding to the first interaction with the user side, comprises:
any current online Internet-of-Things device under a user account triggering a third interaction for searching for an Internet-of-Things device to be accessed therearound in response to the user side selecting a first configuration mode (301), wherein the first configuration mode is to select a current online Internet-of-Things device as the configuration device for configuring the network parameters;
the any current online Internet-of-Things device returning the device information of the found Internet-of-Things device to be accessed to the user side (303; 508), so as to cause the user side to select the current online Internet-of Things device as the configuration device, and to send the second command instruction message to the current online Internet-of-Things device selected as the configuration device (509);
wherein configuring, in response to the second command instruction message, the network parameters for the device information of the Internet-of-Things device to be accessed, comprises:
sending, in response to the second command instruction message, a second probe request to the Internet-of-Things device to be accessed (511), wherein the second probe request carries the device information of the Internet-of-Things device to be accessed, and the network parameters, so that the Internet-of Things device to be accessed obtains the network parameters, and accesses the network based on the obtained network parameters,
wherein the any current online Internet-of-Things device under the user account triggering the third interaction for searching for the Internet-of-Things device to be accessed therearound in response to the user side selecting the first configuration mode, comprises:
the any current online Internet-of Things device under the user account receiving a first command instruction message from the user side (504), wherein the first command instruction message carries the device information of the Internet-of Things device to be accessed;
parsing the first command instruction message to obtain the device information of the Internet-of-Things device to be accessed; and
searching for the Internet-of Things device to be accessed around the current online Internet-of-Things device in response to the first command instruction message.

2. The method as claimed in claim 1, wherein after triggering the second interaction with the Internet-of Things device to be accessed for configuring the network parameters, the method further comprises:
the current online Internet-of-Things device serving as the configuration device triggering a fifth interaction between the current online Internet-of-Things device serving as the configuration device and the Internet-of-Things device to be accessed for querying a reason for failure of being online in response to a fourth interaction with the user side for querying the reason for failure of being online (308; 515).

3. The method as claimed in claim 2, wherein the first command instruction message is sent by the user side based on the selected first configuration mode; wherein the first configuration mode is selected by the user side based on the device information of the found current online Internet-of Things device under the user account;
wherein searching for the Internet-of-Things device to be accessed around the current online Internet-of Things device in response to the first command instruction message, comprises:
sending, in response to the first command instruction message, a first probe request to the Internet-of Things device to be accessed (506), wherein the first probe request carries the device information of the Internet-of Things device to be accessed;
receiving a first probe response responding to the first probe request from the Internet-of-Things device to be accessed (507), wherein the first probe response carries the device information of the Internet-of Things device to be accessed; and
parsing the first probe response to obtain the device information of the found Internet-of-Things device to be accessed.

4. The method as claimed in claim 3, wherein parsing the first probe response to obtain the device information of the found Internet-of-Things device to be accessed, comprises:
sorting found Internet-of Things devices to be accessed based on signal strength of first probe responses to obtain orders for current online Internet-of-Things devices for configuring the respective Internet-of-Things devices to be accessed, to select the current online Internet-of-Things device serving as the configuration device by the user side according to the orders.

5. The method as claimed in claim 2, wherein the current online Internet-of-Things device serving as the configuration device triggering the fifth interaction between the current online Internet-of-Things device serving as the configuration device and the Internet-of-Things device to be accessed for querying the reason for failure of being online in response to the fourth interaction with the user side for querying the reason for failure of being online, comprises:
the current online Internet-of Things device serving as the configuration device receiving a fourth query request for querying the reason for failure of being online from the user side (515), wherein the fourth query request carries the device information of the Internet-of-Things device to be accessed;
parsing the fourth query request to obtain the device information of the Internet-of-Things device to be accessed;
querying, in response to the fourth query request, the reason for failure of being online for the Internet-of-Things device to be accessed; and
returning the queried reason for failure of being online to the user side, so as to cause the user side to select a configuration mode of the network parameters (309; 519);
wherein the configuration mode comprises the first configuration mode and a second configuration mode for manually configuring the network parameters.

6. The method as claimed in claim 5, wherein querying, in response to the fourth query request, the reason for failure of being online for the Internet-of-Things device to be accessed, comprises:
sending a third probe request to the Internet-of-Things device to be accessed, wherein the third probe request carries the device information of the Internet-of-Things device to be accessed;
receiving a third probe response responding to the third probe request from the Internet-of-Things device to be accessed (516), wherein the third probe response carries the device information of the Internet-of-Things device to be accessed and the reason for failure of being online.

7. The method as claimed in claim 5 or 6, wherein the second command instruction message, the first command instruction message, and the fourth query request are sent by the user side to the current online Internet-of Things device via a cloud platform;
after accessing the network, the Internet-of-Things device to be accessed registers with the cloud platform, and a database under the user account in the cloud platform is updated by adding the device information of the registered Internet-of Things device to be accessed;
wherein returning the device information of the found Internet-of-Things device to be accessed to the user side, comprises:
returning the device information of the found Internet-of-Things device to be accessed to the user side via the cloud platform and updating the database under the user account in the cloud platform by adding the device information of the found Internet-of-Things device to be accessed;
wherein returning the queried reason for failure of being online to the user side, comprises:
returning the queried reason for failure of being online to the user side via the cloud platform and updating the database under the user account in the cloud platform by adding the reason for failure of being online of the Internet-of-Things device to be accessed.

8. The method as claimed in claim 3, 4 or 6, wherein the first probe request, the second probe request, the first probe response and the third probe response are new radio broadcast signals, and valid value fields in the new radio broadcast signals comprise: encryption feature information and the device information of the Internet-of-Things device to be accessed, wherein data contents in the valid value fields are obtained by successfully decrypting the device information of the Internet-of Things device to be accessed.

9. An Internet-of-Things device, which is a current online Internet-of-Things device acting as a configuration device, the current online Internet-of-Things device being an Internet-of-Things device that has been connected to the network, the configuration device is configured to configure network parameters for an Internet-of-Things device to be accessed, wherein the Internet-of-Things device comprises a memory and a processor, wherein the memory having stored therein computer programs which, when executed by the processor, cause the processor to carry out all steps of the method for configuring network parameters for an Internet-of-Things device as claimed in any one of claims 1 to 8.

10. A terminal for configuring network parameters for an Internet-of-Things device, wherein the terminal comprises a memory having stored therein computer programs and a processor configured to perform the following steps of:
performing a first interaction with a current online Internet-of-Things device(s);
wherein the first interaction at least comprises: sending a second command instruction message to the current online Internet-of Things device serving as a configuration device, wherein the second command instruction message is used to instruct the current online Internet-of-Things device serving as the configuration device to configure network parameters for an Internet-of Things device to be accessed; and the second command instruction message carries device information of the Internet-of Things device to be accessed to trigger a second interaction between the current online Internet-of-Things device serving as the configuration device with the Internet-of-Things device to be accessed for configuring the network parameters, such that the current online Internet-of-Things device serving as the configuration device configures the network parameters for the device information of the Internet-of-Things device to be accessed in response to the second command instruction message,
wherein performing the first interaction with the current online Internet-of Things device(s), comprises:
broadcasting a first command instruction message to any current any current online Internet-of-Things device under a user account in response to a user side selecting a first configuration mode (504), such that the any current online Internet-of-Things device triggers a third interaction for searching for an Internet-of-Things device to be accessed therearound in response to the user side selecting a first configuration mode (301), wherein the first configuration mode is to select a current online Internet-of-Things device as the configuration device for configuring the network parameters;
the user side selecting the current online Internet-of-Things device as the configuration device based on the device information of the found Internet-of-Things device to be accessed returned by the any current online Internet-of-Things device (508), and sending the second command instruction message to the current online Internet-of-Things device selected as the configuration device (509);
wherein the current online Internet-of Things device serving as the configuration device configuring the network parameters for the device information of the Internet-of Things device to be accessed in response to the second command instruction message, comprises:
sending, in response to the second command instruction message, a second probe request to the Internet-of-Things device to be accessed (511), wherein the second probe request carries the device information of the Internet-of-Things device to be accessed, and the network parameters, so that the Internet-of Things device to be accessed obtains the network parameters, and accesses the network based on the obtained network parameters,
wherein the any current online Internet-of-Things device under the user account triggering the third interaction for searching for the Internet-of-Things device to be accessed therearound in response to the user side selecting the first configuration mode, comprises:
the any current online Internet-of Things device under the user account receiving the first command instruction message from the user side (504), wherein the first command instruction message carries the device information of the Internet-of-Things device to be accessed;
parsing the first command instruction message to obtain the device information of the Internet-of-Things device to be accessed; and
searching for the Internet-of Things device to be accessed around the current online Internet-of-Things device in response to the first command instruction message.

11. An Internet-of Things system, wherein the Internet-of Things system comprises at least one Internet-of-Things device which is configured to carry out all steps of the method for configuring network parameters for an Internet-of Things device as claimed in any one of claims 1 to 8.

12. The system as claimed in claim 11, wherein the system further comprises at least one terminal for configuring the network parameters for the Internet-of-Things device;
the terminal comprises a memory having stored therein computer programs and a processor configured to perform the following steps of:
performing the first interaction with a current online Internet-of-Things device(s);
wherein the first interaction at least comprises: sending a second command instruction message to the current online Internet-of Things device serving as a configuration device, wherein the second command instruction message is used to instruct the current online Internet-of-Things device serving as the configuration device to configure the network parameters for the Internet-of-Things device to be accessed; and the second command instruction message carries the device information of the Internet-of-Things device to be accessed to trigger the second interaction between the current online Internet-of-Things device serving as the configuration device with the Internet-of Things device to be accessed for configuring the network parameters, such that the current online Internet-of-Things device serving as the configuration device configures the network parameters for the device information of the Internet-of-Things device to be accessed in response to the second command instruction message;
preferably, wherein the system further comprises: a cloud platform for operating and maintaining Internet-of Things devices in the Internet-of Things system, configured to transmit interaction information for the first interaction between the terminal and the current online Internet-of Things devices;
wherein the interaction information comprises: interaction information for selecting a configuration mode, and interaction information for selecting the current online Internet-of-Things device as the configuration device;
the device information of the current online Internet-of-Things devices is stored in the cloud platform.

13. A computer readable storage medium, wherein the storage medium having stored therein computer programs which, when executed by a processor, cause the processor to carry out the method for configuring network parameters for an Internet-of-Things device as claimed in any one of claims 1 to 8.

14. A computer program, which, when executed by a processor, causes the processor to carry out all steps of the method for configuring network parameters for an Internet-of Things device as claimed in any one of claims 1 to 8.

## Patentansprüche

1. Verfahren zum Konfigurieren von Netzwerkparametern für eine Internet-der-Dinge-Vorrichtung, wobei das Verfahren umfasst:
Reagieren einer gegenwärtig online befindlichen Internet-der-Dinge-Vorrichtung, die als Konfigurationsvorrichtung dient, auf eine erste Interaktion mit einer Benutzerseite und Auslösen einer zweiten Interaktion mit einer Internet-der-Dinge-Vorrichtung, auf die zugegriffen werden soll, zum Konfigurieren der Netzwerkparameter;
wobei die erste Interaktion zumindest umfasst: Empfangen einer zweiten Befehlsanweisungsnachricht von der Benutzerseite, wobei die zweite Befehlsanweisungsnachricht die gegenwärtig online befindliche Internet-der-Dinge-Vorrichtung, die als Konfigurationsvorrichtung dient, anweist, die Netzwerkparameter für die Internet-der-Dinge-Vorrichtung, auf die zugegriffen werden soll, zu konfigurieren; wobei die zweite Befehlsanweisungsnachricht Vorrichtungsinformationen der Internet-der-Dinge-Vorrichtung, auf die zugegriffen werden soll, mitführt;
wobei die zweite Interaktion zumindest umfasst: Konfigurieren, als Reaktion auf die zweite Befehlsanweisungsnachricht, der Netzwerkparameter für die Vorrichtungsinformationen der Internet-der-Dinge-Vorrichtung, auf die zugegriffen werden soll,
wobei das Reagieren der gegenwärtig online befindlichen Internet-der-Dinge-Vorrichtung, die als Konfigurationsvorrichtung dient, auf die erste Interaktion mit der Benutzerseite umfasst:
Auslösen, durch eine beliebige gegenwärtig online befindliche Internet-der-Dinge-Vorrichtung unter einem Benutzerkonto, einer dritten Interaktion zum Suchen in ihrer Umgebung nach einer Internet-der-Dinge-Vorrichtung, auf die zugegriffen werden soll, als Reaktion darauf, dass die Benutzerseite einen ersten Konfigurationsmodus (301) auswählt, wobei der erste Konfigurationsmodus dem Auswählen einer gegenwärtig online befindlichen Internet-der-Dinge-Vorrichtung als Konfigurationsvorrichtung zum Konfigurieren der Netzwerkparameter dient;
Zurücksenden, durch die beliebige gegenwärtig online befindliche Internet-der-Dinge-Vorrichtung, der Vorrichtungsinformationen der gefundenen Internet-der-Dinge-Vorrichtung, auf die zugegriffen werden soll, an die Benutzerseite (303; 508), um zu veranlassen, dass die Benutzerseite die gegenwärtig online befindliche Internet-der-Dinge-Vorrichtung als die Konfigurationsvorrichtung auswählt und die zweite Befehlsanweisungsnachricht an die als Konfigurationsvorrichtung ausgewählte gegenwärtig online befindliche Internet-der-Dinge-Vorrichtung sendet (509);
wobei das Konfigurieren, als Reaktion auf die zweite Befehlsanweisungsnachricht, der Netzwerkparameter für die Vorrichtungsinformationen der Internet-der-Dinge-Vorrichtung, auf die zugegriffen werden soll, umfasst:
Senden, als Reaktion auf die zweite Befehlsanweisungsnachricht, einer zweiten Prüfanfrage an die Internet-der-Dinge-Vorrichtung, auf die zugegriffen werden soll (511), wobei die zweite Prüfanfrage die Vorrichtungsinformationen der Internet-der-Dinge-Vorrichtung, auf die zugegriffen werden soll, und die Netzwerkparameter mitführt, sodass die Internet-der-Dinge-Vorrichtung, auf die zugegriffen werden soll, die Netzwerkparameter erhält und auf Grundlage der erhaltenen Netzwerkparameter auf das Netzwerk zugreift,
wobei das Auslösen, durch die beliebige gegenwärtig online befindliche Internet-der-Dinge-Vorrichtung unter dem Benutzerkonto, der dritten Interaktion zum Suchen in ihrer Umgebung nach der Internet-der-Dinge-Vorrichtung, auf die zugegriffen werden soll, als Reaktion darauf, dass die Benutzerseite den ersten Konfigurationsmodus auswählt, umfasst:
Empfangen, durch die beliebige gegenwärtig online befindliche Internet-der-Dinge-Vorrichtung unter dem Benutzerkonto, einer ersten Befehlsanweisungsnachricht von der Benutzerseite (504), wobei die erste Befehlsanweisungsnachricht die Vorrichtungsinformationen der Internet-der-Dinge-Vorrichtung, auf die zugegriffen werden soll, mitführt;
Analysieren der ersten Befehlsanweisungsnachricht, um die Vorrichtungsinformationen der Internet-der-Dinge-Vorrichtung, auf die zugegriffen werden soll, zu erhalten; und
Suchen nach der Internet-der-Dinge-Vorrichtung, auf die zugegriffen werden soll, in der Umgebung der gegenwärtig online befindlichen Internet-der-Dinge-Vorrichtung als Reaktion auf die erste Befehlsanweisungsnachricht.

2. Verfahren nach Anspruch 1, wobei das Verfahren nach dem Auslösen der zweiten Interaktion mit der Internet-der-Dinge-Vorrichtung, auf die zugegriffen werden soll, zum Konfigurieren der Netzwerkparameter ferner umfasst:
Auslösen, durch die gegenwärtig online befindliche Internet-der-Dinge-Vorrichtung, die als Konfigurationsvorrichtung dient, einer fünften Interaktion zwischen der gegenwärtig online befindlichen Internet-der-Dinge-Vorrichtung, die als Konfigurationsvorrichtung dient, und der Internet-der-Dinge-Vorrichtung, auf die zugegriffen werden soll, zum Abfragen eines Grundes für das Fehlschlagen des Onlinegehens als Reaktion auf eine vierte Interaktion mit der Benutzerseite zum Abfragen des Grundes für das Fehlschlagen des Onlinegehens (308; 515).

3. Verfahren nach Anspruch 2, wobei die erste Befehlsanweisungsnachricht von der Benutzerseite auf Grundlage des ausgewählten ersten Konfigurationsmodus gesendet wird; wobei der erste Konfigurationsmodus von der Benutzerseite auf Grundlage der Vorrichtungsinformationen der gefundenen gegenwärtig online befindlichen Internet-der-Dinge-Vorrichtung unter dem Benutzerkonto ausgewählt wird;
wobei das Suchen nach der Internet-der-Dinge-Vorrichtung, auf die zugegriffen werden soll, in der Umgebung der gegenwärtig online befindlichen Internet-der-Dinge-Vorrichtung als Reaktion auf die erste Befehlsanweisungsnachricht umfasst:
Senden, als Reaktion auf die erste Befehlsanweisungsnachricht, einer ersten Prüfanfrage an die Internet-der-Dinge-Vorrichtung, auf die zugegriffen werden soll (506), wobei die erste Prüfanfrage die Vorrichtungsinformationen der Internet-der-Dinge-Vorrichtung, auf die zugegriffen werden soll, mitführt;
Empfangen einer auf die erste Prüfanfrage antwortenden ersten Prüfantwort von der Internet-der-Dinge-Vorrichtung, auf die zugegriffen werden soll (507), wobei die erste Prüfantwort die Vorrichtungsinformationen der Internet-der-Dinge-Vorrichtung, auf die zugegriffen werden soll, mitführt; und
Analysieren der ersten Prüfantwort, um die Vorrichtungsinformationen der gefundenen Internet-der-Dinge-Vorrichtung, auf die zugegriffen werden soll, zu erhalten.

4. Verfahren nach Anspruch 3, wobei das Analysieren der ersten Prüfantwort, um die Vorrichtungsinformationen der gefundenen Internet-der-Dinge-Vorrichtung, auf die zugegriffen werden soll, zu erhalten, umfasst:
Sortieren gefundener Internet-der-Dinge-Vorrichtungen, auf die zugegriffen werden soll, auf Grundlage der Signalstärke erster Prüfantworten, um Rangfolgen gegenwärtig online befindlicher Internet-der-Dinge-Vorrichtungen zum Konfigurieren der jeweiligen Internet-der-Dinge-Vorrichtungen, auf die zugegriffen werden soll, zu erhalten, sodass die Benutzerseite die gegenwärtig online befindliche Internet-der-Dinge-Vorrichtung, die als Konfigurationsvorrichtung dient, gemäß den Rangfolgen auswählt.

5. Verfahren nach Anspruch 2, wobei das Auslösen, durch die gegenwärtig online befindliche Internet-der-Dinge-Vorrichtung, die als Konfigurationsvorrichtung dient, der fünften Interaktion zwischen der gegenwärtig online befindlichen Internet-der-Dinge-Vorrichtung, die als Konfigurationsvorrichtung dient, und der Internet-der-Dinge-Vorrichtung, auf die zugegriffen werden soll, zum Abfragen des Grundes für das Fehlschlagen des Onlinegehens als Reaktion auf die vierte Interaktion mit der Benutzerseite zum Abfragen des Grundes für das Fehlschlagen des Onlinegehens umfasst:
Empfangen, durch die gegenwärtig online befindliche Internet-der-Dinge-Vorrichtung, die als Konfigurationsvorrichtung dient, einer vierten Abfrageanfrage zum Abfragen des Grundes für das Fehlschlagen des Onlinegehens von der Benutzerseite (515), wobei die vierte Abfrageanfrage die Vorrichtungsinformationen der Internet-der-Dinge-Vorrichtung, auf die zugegriffen werden soll, mitführt;
Analysieren der vierten Abfrageanfrage, um die Vorrichtungsinformationen der Internet-der-Dinge-Vorrichtung, auf die zugegriffen werden soll, zu erhalten;
Abfragen, als Reaktion auf die vierte Abfrageanfrage, des Grundes für das Fehlschlagen des Onlinegehens der Internet-der-Dinge-Vorrichtung, auf die zugegriffen werden soll; und
Zurücksenden des abgefragten Grundes für das Fehlschlagen des Onlinegehens an die Benutzerseite, um zu veranlassen, dass die Benutzerseite einen Konfigurationsmodus der Netzwerkparameter auswählt (309; 519);
wobei der Konfigurationsmodus den ersten Konfigurationsmodus und einen zweiten Konfigurationsmodus zum manuellen Konfigurieren der Netzwerkparameter umfasst.

6. Verfahren nach Anspruch 5, wobei das Abfragen, als Reaktion auf die vierte Abfrageanfrage, des Grundes für das Fehlschlagen des Onlinegehens der Internet-der-Dinge-Vorrichtung, auf die zugegriffen werden soll, umfasst:
Senden einer dritten Prüfanfrage an die Internet-der-Dinge-Vorrichtung, auf die zugegriffen werden soll, wobei die dritte Prüfanfrage die Vorrichtungsinformationen der Internet-der-Dinge-Vorrichtung, auf die zugegriffen werden soll, mitführt;
Empfangen einer auf die dritte Prüfanfrage antwortenden dritten Prüfantwort von der Internet-der-Dinge-Vorrichtung, auf die zugegriffen werden soll (516), wobei die dritte Prüfantwort die Vorrichtungsinformationen der Internet-der-Dinge-Vorrichtung, auf die zugegriffen werden soll, und den Grund für das Fehlschlagen des Onlinegehens mitführt.

7. Verfahren nach Anspruch 5 oder 6, wobei die zweite Befehlsanweisungsnachricht, die erste Befehlsanweisungsnachricht und die vierte Abfrageanfrage von der Benutzerseite über eine Cloud-Plattform an die gegenwärtig online befindliche Internet-der-Dinge-Vorrichtung gesendet werden;
wobei sich die Internet-der-Dinge-Vorrichtung, auf die zugegriffen werden soll, nach dem Zugriff auf das Netzwerk bei der Cloud-Plattform registriert und eine Datenbank unter dem Benutzerkonto in der Cloud-Plattform aktualisiert wird, indem die Vorrichtungsinformationen der registrierten Internet-der-Dinge-Vorrichtung, auf die zugegriffen werden soll, hinzugefügt werden;
wobei das Zurücksenden der Vorrichtungsinformationen der gefundenen Internet-der-Dinge-Vorrichtung, auf die zugegriffen werden soll, an die Benutzerseite umfasst:
Zurücksenden der Vorrichtungsinformationen der gefundenen Internet-der-Dinge-Vorrichtung, auf die zugegriffen werden soll, über die Cloud-Plattform an die Benutzerseite und Aktualisieren der Datenbank unter dem Benutzerkonto in der Cloud-Plattform durch Hinzufügen der Vorrichtungsinformationen der gefundenen Internet-der-Dinge-Vorrichtung, auf die zugegriffen werden soll;
wobei das Zurücksenden des abgefragten Grundes für das Fehlschlagen des Onlinegehens an die Benutzerseite umfasst:
Zurücksenden des abgefragten Grundes für das Fehlschlagen des Onlinegehens über die Cloud-Plattform an die Benutzerseite und Aktualisieren der Datenbank unter dem Benutzerkonto in der Cloud-Plattform durch Hinzufügen des Grundes für das Fehlschlagen des Onlinegehens der Internet-der-Dinge-Vorrichtung, auf die zugegriffen werden soll.

8. Verfahren nach Anspruch 3, 4 oder 6, wobei die erste Prüfanfrage, die zweite Prüfanfrage, die erste Prüfantwort und die dritte Prüfantwort New-Radio-Broadcast-Signale sind und Nutzwertfelder in den New-Radio-Broadcast-Signalen umfassen: Verschlüsselungsmerkmalsinformationen und die Vorrichtungsinformationen der Internet-der-Dinge-Vorrichtung, auf die zugegriffen werden soll, wobei Dateninhalte in den Nutzwertfeldern durch erfolgreiches Entschlüsseln der Vorrichtungsinformationen der Internet-der-Dinge-Vorrichtung, auf die zugegriffen werden soll, erhalten werden.

9. Internet-der-Dinge-Vorrichtung, die eine als Konfigurationsvorrichtung wirkende gegenwärtig online befindliche Internet-der-Dinge-Vorrichtung ist, wobei die gegenwärtig online befindliche Internet-der-Dinge-Vorrichtung eine Internet-der-Dinge-Vorrichtung ist, die mit dem Netzwerk verbunden worden ist, wobei die Konfigurationsvorrichtung dazu konfiguriert ist, Netzwerkparameter für eine Internet-der-Dinge-Vorrichtung, auf die zugegriffen werden soll, zu konfigurieren, wobei die Internet-der-Dinge-Vorrichtung einen Speicher und einen Prozessor umfasst, wobei in dem Speicher Computerprogramme gespeichert sind, die bei Ausführung durch den Prozessor den Prozessor dazu veranlassen, sämtliche Schritte des Verfahrens zum Konfigurieren von Netzwerkparametern für eine Internet-der-Dinge-Vorrichtung nach einem der Ansprüche 1 bis 8 auszuführen.

10. Endgerät zum Konfigurieren von Netzwerkparametern für eine Internet-der-Dinge-Vorrichtung, wobei das Endgerät einen Speicher, in dem Computerprogramme gespeichert sind, und einen Prozessor umfasst, der dazu konfiguriert ist, die folgenden Schritte durchzuführen:
Durchführen einer ersten Interaktion mit einer oder mehreren gegenwärtig online befindlichen Internet-der-Dinge-Vorrichtungen;
wobei die erste Interaktion zumindest umfasst: Senden einer zweiten Befehlsanweisungsnachricht an die gegenwärtig online befindliche Internet-der-Dinge-Vorrichtung, die als Konfigurationsvorrichtung dient, wobei die zweite Befehlsanweisungsnachricht dazu verwendet wird, die gegenwärtig online befindliche Internet-der-Dinge-Vorrichtung, die als Konfigurationsvorrichtung dient, anzuweisen, Netzwerkparameter für eine Internet-der-Dinge-Vorrichtung, auf die zugegriffen werden soll, zu konfigurieren; und wobei die zweite Befehlsanweisungsnachricht Vorrichtungsinformationen der Internet-der-Dinge-Vorrichtung, auf die zugegriffen werden soll, mitführt, um eine zweite Interaktion zwischen der gegenwärtig online befindlichen Internet-der-Dinge-Vorrichtung, die als Konfigurationsvorrichtung dient, und der Internet-der-Dinge-Vorrichtung, auf die zugegriffen werden soll, zum Konfigurieren der Netzwerkparameter auszulösen, sodass die gegenwärtig online befindliche Internet-der-Dinge-Vorrichtung, die als Konfigurationsvorrichtung dient, als Reaktion auf die zweite Befehlsanweisungsnachricht die Netzwerkparameter für die Vorrichtungsinformationen der Internet-der-Dinge-Vorrichtung, auf die zugegriffen werden soll, konfiguriert,
wobei das Durchführen der ersten Interaktion mit der einen oder den mehreren gegenwärtig online befindlichen Internet-der-Dinge-Vorrichtungen umfasst:
Broadcast-Senden einer ersten Befehlsanweisungsnachricht an eine beliebige gegenwärtig online befindliche Internet-der-Dinge-Vorrichtung unter einem Benutzerkonto als Reaktion darauf, dass eine Benutzerseite einen ersten Konfigurationsmodus (504) auswählt, sodass die beliebige gegenwärtig online befindliche Internet-der-Dinge-Vorrichtung als Reaktion darauf, dass die Benutzerseite den ersten Konfigurationsmodus (301) auswählt, eine dritte Interaktion zum Suchen nach einer Internet-der-Dinge-Vorrichtung, auf die zugegriffen werden soll, in ihrer Umgebung auslöst, wobei der erste Konfigurationsmodus dem Auswählen einer gegenwärtig online befindlichen Internet-der-Dinge-Vorrichtung als Konfigurationsvorrichtung zum Konfigurieren der Netzwerkparameter dient;
Auswählen, durch die Benutzerseite, der gegenwärtig online befindlichen Internet-der-Dinge-Vorrichtung als Konfigurationsvorrichtung auf Grundlage der Vorrichtungsinformationen der gefundenen Internet-der-Dinge-Vorrichtung, auf die zugegriffen werden soll, die von der beliebigen gegenwärtig online befindlichen Internet-der-Dinge-Vorrichtung zurückgesendet werden (508), und Senden der zweiten Befehlsanweisungsnachricht an die als Konfigurationsvorrichtung ausgewählte gegenwärtig online befindliche Internet-der-Dinge-Vorrichtung (509);
wobei das Konfigurieren, durch die gegenwärtig online befindliche Internet-der-Dinge-Vorrichtung, die als Konfigurationsvorrichtung dient, der Netzwerkparameter für die Vorrichtungsinformationen der Internet-der-Dinge-Vorrichtung, auf die zugegriffen werden soll, als Reaktion auf die zweite Befehlsanweisungsnachricht umfasst:
Senden, als Reaktion auf die zweite Befehlsanweisungsnachricht, einer zweiten Prüfanfrage an die Internet-der-Dinge-Vorrichtung, auf die zugegriffen werden soll (511), wobei die zweite Prüfanfrage die Vorrichtungsinformationen der Internet-der-Dinge-Vorrichtung, auf die zugegriffen werden soll, und die Netzwerkparameter mitführt, sodass die Internet-der-Dinge-Vorrichtung, auf die zugegriffen werden soll, die Netzwerkparameter erhält und auf Grundlage der erhaltenen Netzwerkparameter auf das Netzwerk zugreift,
wobei das Auslösen, durch die beliebige gegenwärtig online befindliche Internet-der-Dinge-Vorrichtung unter dem Benutzerkonto, der dritten Interaktion zum Suchen in ihrer Umgebung nach der Internet-der-Dinge-Vorrichtung, auf die zugegriffen werden soll, als Reaktion darauf, dass die Benutzerseite den ersten Konfigurationsmodus auswählt, umfasst:
Empfangen, durch die beliebige gegenwärtig online befindliche Internet-der-Dinge-Vorrichtung unter dem Benutzerkonto, der ersten Befehlsanweisungsnachricht von der Benutzerseite (504), wobei die erste Befehlsanweisungsnachricht die Vorrichtungsinformationen der Internet-der-Dinge-Vorrichtung, auf die zugegriffen werden soll, mitführt;
Analysieren der ersten Befehlsanweisungsnachricht, um die Vorrichtungsinformationen der Internet-der-Dinge-Vorrichtung, auf die zugegriffen werden soll, zu erhalten; und
Suchen nach der Internet-der-Dinge-Vorrichtung, auf die zugegriffen werden soll, in der Umgebung der gegenwärtig online befindlichen Internet-der-Dinge-Vorrichtung als Reaktion auf die erste Befehlsanweisungsnachricht.

11. Internet-der-Dinge-System, wobei das Internet-der-Dinge-System mindestens eine Internet-der-Dinge-Vorrichtung umfasst, die dazu konfiguriert ist, sämtliche Schritte des Verfahrens zum Konfigurieren von Netzwerkparametern für eine Internet-der-Dinge-Vorrichtung nach einem der Ansprüche 1 bis 8 auszuführen.

12. System nach Anspruch 11, wobei das System ferner mindestens ein Endgerät zum Konfigurieren der Netzwerkparameter für die Internet-der-Dinge-Vorrichtung umfasst;
wobei das Endgerät einen Speicher, in dem Computerprogramme gespeichert sind, und einen Prozessor umfasst, der dazu konfiguriert ist, die folgenden Schritte durchzuführen:
Durchführen der ersten Interaktion mit einer oder mehreren gegenwärtig online befindlichen Internet-der-Dinge-Vorrichtung(en);
wobei die erste Interaktion zumindest umfasst: Senden einer zweiten Befehlsanweisungsnachricht an die gegenwärtig online befindliche Internet-der-Dinge-Vorrichtung, die als Konfigurationsvorrichtung dient, wobei die zweite Befehlsanweisungsnachricht dazu verwendet wird, die gegenwärtig online befindliche Internet-der-Dinge-Vorrichtung, die als Konfigurationsvorrichtung dient, anzuweisen, die Netzwerkparameter für die Internet-der-Dinge-Vorrichtung, auf die zugegriffen werden soll, zu konfigurieren; und wobei die zweite Befehlsanweisungsnachricht die Vorrichtungsinformationen der Internet-der-Dinge-Vorrichtung, auf die zugegriffen werden soll, mitführt, um die zweite Interaktion zwischen der gegenwärtig online befindlichen Internet-der-Dinge-Vorrichtung, die als Konfigurationsvorrichtung dient, und der Internet-der-Dinge-Vorrichtung, auf die zugegriffen werden soll, zum Konfigurieren der Netzwerkparameter auszulösen, sodass die gegenwärtig online befindliche Internet-der-Dinge-Vorrichtung, die als Konfigurationsvorrichtung dient, als Reaktion auf die zweite Befehlsanweisungsnachricht die Netzwerkparameter für die Vorrichtungsinformationen der Internet-der-Dinge-Vorrichtung, auf die zugegriffen werden soll, konfiguriert;
vorzugsweise, wobei das System ferner umfasst: eine Cloud-Plattform zum Betreiben und Warten von Internet-der-Dinge-Vorrichtungen in dem Internet-der-Dinge-System, die dazu konfiguriert ist, Interaktionsinformationen für die erste Interaktion zwischen dem Endgerät und den gegenwärtig online befindlichen Internet-der-Dinge-Vorrichtungen zu übertragen;
wobei die Interaktionsinformationen umfassen: Interaktionsinformationen zum Auswählen eines Konfigurationsmodus und Interaktionsinformationen zum Auswählen der gegenwärtig online befindlichen Internet-der-Dinge-Vorrichtung als Konfigurationsvorrichtung;
wobei die Vorrichtungsinformationen der gegenwärtig online befindlichen Internet-der-Dinge-Vorrichtungen in der Cloud-Plattform gespeichert sind.

13. Computerlesbares Speichermedium, wobei in dem Speichermedium Computerprogramme gespeichert sind, die bei Ausführung durch einen Prozessor den Prozessor dazu veranlassen, das Verfahren zum Konfigurieren von Netzwerkparametern für eine Internet-der-Dinge-Vorrichtung nach einem der Ansprüche 1 bis 8 auszuführen.

14. Computerprogramm, das bei Ausführung durch einen Prozessor den Prozessor dazu veranlasst, sämtliche Schritte des Verfahrens zum Konfigurieren von Netzwerkparametern für eine Internet-der-Dinge-Vorrichtung nach einem der Ansprüche 1 bis 8 auszuführen.

## Revendications

1. Procédé de configuration de paramètres de réseau pour un dispositif de l'Internet des objets, dans lequel le procédé comprend :
un dispositif de l'Internet des objets actuellement en ligne servant de dispositif de configuration répondant à une première interaction avec un côté utilisateur, déclenchant une deuxième interaction avec un dispositif de l'Internet des objets auquel accéder afin de configurer les paramètres de réseau ;
dans lequel la première interaction comprend au moins : la réception, depuis le côté utilisateur, d'un deuxième message d'instruction de commande, le deuxième message d'instruction de commande commandant au dispositif de l'Internet des objets actuellement en ligne servant de dispositif de configuration de configurer les paramètres de réseau pour le dispositif de l'Internet des objets auquel accéder ; dans lequel le deuxième message d'instruction de commande transporte des informations de dispositif du dispositif de l'Internet des objets auquel accéder ;
la deuxième interaction comprend au moins : la configuration, en réponse au deuxième message d'instruction de commande, des paramètres de réseau pour les informations de dispositif du dispositif de l'Internet des objets auquel accéder,
dans lequel la réponse, par le dispositif de l'Internet des objets actuellement en ligne servant de dispositif de configuration, à la première interaction avec le côté utilisateur comprend :
un quelconque dispositif de l'Internet des objets actuellement en ligne sous un compte utilisateur déclenchant une troisième interaction afin de rechercher, à proximité de celui-ci, un dispositif de l'Internet des objets auquel accéder, en réponse à la sélection, par le côté utilisateur, d'un premier mode de configuration (301), dans lequel le premier mode de configuration consiste à sélectionner un dispositif de l'Internet des objets actuellement en ligne servant de dispositif de configuration pour configurer les paramètres de réseau ;
le quelconque dispositif de l'Internet des objets actuellement en ligne renvoyant au côté utilisateur les informations de dispositif du dispositif de l'Internet des objets auquel accéder trouvé (303 ; 508), de manière à amener le côté utilisateur à sélectionner le dispositif de l'Internet des objets actuellement en ligne en tant que dispositif de configuration et à envoyer le deuxième message d'instruction de commande au dispositif de l'Internet des objets actuellement en ligne sélectionné en tant que dispositif de configuration (509) ;
dans lequel la configuration, en réponse au deuxième message d'instruction de commande, des paramètres de réseau pour les informations de dispositif du dispositif de l'Internet des objets auquel accéder comprend :
l'envoi, en réponse au deuxième message d'instruction de commande, d'une deuxième demande de sondage au dispositif de l'Internet des objets auquel accéder (511), dans lequel la deuxième demande de sondage transporte les informations de dispositif du dispositif de l'Internet des objets auquel accéder et les paramètres de réseau, de sorte que le dispositif de l'Internet des objets auquel accéder obtient les paramètres de réseau et accède au réseau sur la base des paramètres de réseau obtenus,
dans lequel le déclenchement, par le quelconque dispositif de l'Internet des objets actuellement en ligne sous le compte utilisateur, de la troisième interaction afin de rechercher, à proximité de celui-ci, le dispositif de l'Internet des objets auquel accéder, en réponse à la sélection, par le côté utilisateur, du premier mode de configuration, comprend :
la réception, par le quelconque dispositif de l'Internet des objets actuellement en ligne sous le compte utilisateur, d'un premier message d'instruction de commande provenant du côté utilisateur (504), dans lequel le premier message d'instruction de commande transporte les informations de dispositif du dispositif de l'Internet des objets auquel accéder ;
l'analyse du premier message d'instruction de commande afin d'obtenir les informations de dispositif du dispositif de l'Internet des objets auquel accéder ; et
la recherche du dispositif de l'Internet des objets auquel accéder à proximité du dispositif de l'Internet des objets actuellement en ligne, en réponse au premier message d'instruction de commande.

2. Procédé selon la revendication 1, dans lequel, après le déclenchement de la deuxième interaction avec le dispositif de l'Internet des objets auquel accéder afin de configurer les paramètres de réseau, le procédé comprend en outre :
le dispositif de l'Internet des objets actuellement en ligne servant de dispositif de configuration déclenchant une cinquième interaction entre le dispositif de l'Internet des objets actuellement en ligne servant de dispositif de configuration et le dispositif de l'Internet des objets auquel accéder afin d'interroger la raison de l'échec de mise en ligne, en réponse à une quatrième interaction avec le côté utilisateur afin d'interroger la raison de l'échec de mise en ligne (308 ; 515).

3. Procédé selon la revendication 2, dans lequel le premier message d'instruction de commande est envoyé par le côté utilisateur sur la base du premier mode de configuration sélectionné ; dans lequel le premier mode de configuration est sélectionné par le côté utilisateur sur la base des informations de dispositif du dispositif de l'Internet des objets actuellement en ligne trouvé sous le compte utilisateur ;
dans lequel la recherche du dispositif de l'Internet des objets auquel accéder à proximité du dispositif de l'Internet des objets actuellement en ligne, en réponse au premier message d'instruction de commande, comprend :
l'envoi, en réponse au premier message d'instruction de commande, d'une première demande de sondage au dispositif de l'Internet des objets auquel accéder (506), dans lequel la première demande de sondage transporte les informations de dispositif du dispositif de l'Internet des objets auquel accéder ;
la réception, en provenance du dispositif de l'Internet des objets auquel accéder, d'une première réponse de sondage répondant à la première demande de sondage (507), dans lequel la première réponse de sondage transporte les informations de dispositif du dispositif de l'Internet des objets auquel accéder ; et
l'analyse de la première réponse de sondage afin d'obtenir les informations de dispositif du dispositif de l'Internet des objets auquel accéder trouvé.

4. Procédé selon la revendication 3, dans lequel l'analyse de la première réponse de sondage afin d'obtenir les informations de dispositif du dispositif de l'Internet des objets auquel accéder trouvé comprend :
le classement des dispositifs de l'Internet des objets auxquels accéder trouvés sur la base de l'intensité du signal des premières réponses de sondage afin d'obtenir des ordres pour les dispositifs de l'Internet des objets actuellement en ligne destinés à configurer les dispositifs respectifs de l'Internet des objets auxquels accéder, afin que le côté utilisateur sélectionne, selon les ordres, le dispositif de l'Internet des objets actuellement en ligne servant de dispositif de configuration.

5. Procédé selon la revendication 2, dans lequel le déclenchement, par le dispositif de l'Internet des objets actuellement en ligne servant de dispositif de configuration, de la cinquième interaction entre le dispositif de l'Internet des objets actuellement en ligne servant de dispositif de configuration et le dispositif de l'Internet des objets auquel accéder afin d'interroger la raison de l'échec de mise en ligne, en réponse à la quatrième interaction avec le côté utilisateur destinée à interroger la raison de l'échec de mise en ligne, comprend :
la réception, par le dispositif de l'Internet des objets actuellement en ligne servant de dispositif de configuration, d'une quatrième demande d'interrogation provenant du côté utilisateur et destinée à interroger la raison de l'échec de mise en ligne (515), dans lequel la quatrième demande d'interrogation transporte les informations de dispositif du dispositif de l'Internet des objets auquel accéder ;
l'analyse de la quatrième demande d'interrogation afin d'obtenir les informations de dispositif du dispositif de l'Internet des objets auquel accéder ;
l'interrogation, en réponse à la quatrième demande d'interrogation, de la raison de l'échec de mise en ligne du dispositif de l'Internet des objets auquel accéder ; et
le renvoi au côté utilisateur de la raison interrogée de l'échec de mise en ligne, de manière à amener le côté utilisateur à sélectionner un mode de configuration des paramètres de réseau (309 ; 519) ;
dans lequel le mode de configuration comprend le premier mode de configuration et un deuxième mode de configuration destiné à configurer manuellement les paramètres de réseau.

6. Procédé selon la revendication 5, dans lequel l'interrogation, en réponse à la quatrième demande d'interrogation, de la raison de l'échec de mise en ligne du dispositif de l'Internet des objets auquel accéder comprend :
l'envoi d'une troisième demande de sondage au dispositif de l'Internet des objets auquel accéder, dans lequel la troisième demande de sondage transporte les informations de dispositif du dispositif de l'Internet des objets auquel accéder ;
la réception, en provenance du dispositif de l'Internet des objets auquel accéder, d'une troisième réponse de sondage répondant à la troisième demande de sondage (516), dans lequel la troisième réponse de sondage transporte les informations de dispositif du dispositif de l'Internet des objets auquel accéder et la raison de l'échec de mise en ligne.

7. Procédé selon la revendication 5 ou 6, dans lequel le deuxième message d'instruction de commande, le premier message d'instruction de commande et la quatrième demande d'interrogation sont envoyés par le côté utilisateur au dispositif de l'Internet des objets actuellement en ligne par l'intermédiaire d'une plateforme en nuage ;
après avoir accédé au réseau, le dispositif de l'Internet des objets auquel accéder s'enregistre auprès de la plateforme en nuage, et une base de données sous le compte utilisateur dans la plateforme en nuage est mise à jour par ajout des informations de dispositif du dispositif de l'Internet des objets auquel accéder enregistré ;
dans lequel le renvoi au côté utilisateur des informations de dispositif du dispositif de l'Internet des objets auquel accéder trouvé comprend :
le renvoi au côté utilisateur, par l'intermédiaire de la plateforme en nuage, des informations de dispositif du dispositif de l'Internet des objets auquel accéder trouvé, et la mise à jour de la base de données sous le compte utilisateur dans la plateforme en nuage par ajout des informations de dispositif du dispositif de l'Internet des objets auquel accéder trouvé ;
dans lequel le renvoi au côté utilisateur de la raison interrogée de l'échec de mise en ligne comprend :
le renvoi au côté utilisateur, par l'intermédiaire de la plateforme en nuage, de la raison interrogée de l'échec de mise en ligne, et la mise à jour de la base de données sous le compte utilisateur dans la plateforme en nuage par ajout de la raison de l'échec de mise en ligne du dispositif de l'Internet des objets auquel accéder.

8. Procédé selon la revendication 3, 4 ou 6, dans lequel la première demande de sondage, la deuxième demande de sondage, la première réponse de sondage et la troisième réponse de sondage sont des signaux de diffusion de nouvelle radio, et des champs de valeur valide dans les signaux de diffusion de nouvelle radio comprennent : des informations de caractéristique de chiffrement et les informations de dispositif du dispositif de l'Internet des objets auquel accéder, dans lequel les contenus de données des champs de valeur valide sont obtenus par déchiffrement réussi des informations de dispositif du dispositif de l'Internet des objets auquel accéder.

9. Dispositif de l'Internet des objets, qui est un dispositif de l'Internet des objets actuellement en ligne agissant en tant que dispositif de configuration, le dispositif de l'Internet des objets actuellement en ligne étant un dispositif de l'Internet des objets qui a été connecté au réseau, le dispositif de configuration étant configuré pour configurer des paramètres de réseau pour un dispositif de l'Internet des objets auquel accéder, dans lequel le dispositif de l'Internet des objets comprend une mémoire et un processeur, la mémoire ayant stocké en son sein des programmes informatiques qui, lorsqu'ils sont exécutés par le processeur, amènent le processeur à mettre en œuvre toutes les étapes du procédé de configuration de paramètres de réseau pour un dispositif de l'Internet des objets selon l'une quelconque des revendications 1 à 8.

10. Terminal de configuration de paramètres de réseau pour un dispositif de l'Internet des objets, dans lequel le terminal comprend une mémoire ayant stocké en son sein des programmes informatiques et un processeur configuré pour exécuter les étapes suivantes consistant à :
l'exécution d'une première interaction avec un ou plusieurs dispositifs de l'Internet des objets actuellement en ligne ;
dans lequel la première interaction comprend au moins : l'envoi d'un deuxième message d'instruction de commande au dispositif de l'Internet des objets actuellement en ligne servant de dispositif de configuration, dans lequel le deuxième message d'instruction de commande est utilisé pour ordonner au dispositif de l'Internet des objets actuellement en ligne servant de dispositif de configuration de configurer des paramètres de réseau pour un dispositif de l'Internet des objets auquel accéder ; et le deuxième message d'instruction de commande transporte des informations de dispositif du dispositif de l'Internet des objets auquel accéder afin de déclencher une deuxième interaction entre le dispositif de l'Internet des objets actuellement en ligne servant de dispositif de configuration et le dispositif de l'Internet des objets auquel accéder pour configurer les paramètres de réseau, de sorte que le dispositif de l'Internet des objets actuellement en ligne servant de dispositif de configuration configure, en réponse au deuxième message d'instruction de commande, les paramètres de réseau pour les informations de dispositif du dispositif de l'Internet des objets auquel accéder,
dans lequel l'exécution de la première interaction avec le ou les dispositifs de l'Internet des objets actuellement en ligne comprend :
la diffusion d'un premier message d'instruction de commande à un quelconque dispositif de l'Internet des objets actuellement en ligne sous un compte utilisateur, en réponse à la sélection, par un côté utilisateur, d'un premier mode de configuration (504), de sorte que le quelconque dispositif de l'Internet des objets actuellement en ligne déclenche une troisième interaction afin de rechercher, à proximité de celui-ci, un dispositif de l'Internet des objets auquel accéder, en réponse à la sélection, par le côté utilisateur, d'un premier mode de configuration (301), dans lequel le premier mode de configuration consiste à sélectionner un dispositif de l'Internet des objets actuellement en ligne en tant que dispositif de configuration pour configurer les paramètres de réseau ;
la sélection, par le côté utilisateur, du dispositif de l'Internet des objets actuellement en ligne en tant que dispositif de configuration sur la base des informations de dispositif du dispositif de l'Internet des objets auquel accéder trouvé renvoyées par le quelconque dispositif de l'Internet des objets actuellement en ligne (508), et l'envoi du deuxième message d'instruction de commande au dispositif de l'Internet des objets actuellement en ligne sélectionné en tant que dispositif de configuration (509) ;
dans lequel la configuration, par le dispositif de l'Internet des objets actuellement en ligne servant de dispositif de configuration, des paramètres de réseau pour les informations de dispositif du dispositif de l'Internet des objets auquel accéder, en réponse au deuxième message d'instruction de commande, comprend :
l'envoi, en réponse au deuxième message d'instruction de commande, d'une deuxième demande de sondage au dispositif de l'Internet des objets auquel accéder (511), dans lequel la deuxième demande de sondage transporte les informations de dispositif du dispositif de l'Internet des objets auquel accéder et les paramètres de réseau, de sorte que le dispositif de l'Internet des objets auquel accéder obtient les paramètres de réseau et accède au réseau sur la base des paramètres de réseau obtenus,
dans lequel le déclenchement, par le quelconque dispositif de l'Internet des objets actuellement en ligne sous le compte utilisateur, de la troisième interaction afin de rechercher, à proximité de celui-ci, le dispositif de l'Internet des objets auquel accéder, en réponse à la sélection, par le côté utilisateur, du premier mode de configuration, comprend :
la réception, par le quelconque dispositif de l'Internet des objets actuellement en ligne sous le compte utilisateur, du premier message d'instruction de commande provenant du côté utilisateur (504), dans lequel le premier message d'instruction de commande transporte les informations de dispositif du dispositif de l'Internet des objets auquel accéder ;
l'analyse du premier message d'instruction de commande afin d'obtenir les informations de dispositif du dispositif de l'Internet des objets auquel accéder ; et
la recherche du dispositif de l'Internet des objets auquel accéder à proximité du dispositif de l'Internet des objets actuellement en ligne, en réponse au premier message d'instruction de commande.

11. Système de l'Internet des objets, dans lequel le système de l'Internet des objets comprend au moins un dispositif de l'Internet des objets configuré pour mettre en œuvre toutes les étapes du procédé de configuration de paramètres de réseau pour un dispositif de l'Internet des objets selon l'une quelconque des revendications 1 à 8.

12. Système selon la revendication 11, dans lequel le système comprend en outre au moins un terminal destiné à configurer les paramètres de réseau pour le dispositif de l'Internet des objets ;
le terminal comprend une mémoire ayant stocké en son sein des programmes informatiques et un processeur configuré pour exécuter les étapes suivantes consistant à :
l'exécution de la première interaction avec un ou plusieurs dispositifs de l'Internet des objets actuellement en ligne ;
dans lequel la première interaction comprend au moins : l'envoi d'un deuxième message d'instruction de commande au dispositif de l'Internet des objets actuellement en ligne servant de dispositif de configuration, dans lequel le deuxième message d'instruction de commande est utilisé pour ordonner au dispositif de l'Internet des objets actuellement en ligne servant de dispositif de configuration de configurer les paramètres de réseau pour le dispositif de l'Internet des objets auquel accéder ; et le deuxième message d'instruction de commande transporte les informations de dispositif du dispositif de l'Internet des objets auquel accéder afin de déclencher la deuxième interaction entre le dispositif de l'Internet des objets actuellement en ligne servant de dispositif de configuration et le dispositif de l'Internet des objets auquel accéder pour configurer les paramètres de réseau, de sorte que le dispositif de l'Internet des objets actuellement en ligne servant de dispositif de configuration configure, en réponse au deuxième message d'instruction de commande, les paramètres de réseau pour les informations de dispositif du dispositif de l'Internet des objets auquel accéder ;
de préférence, dans lequel le système comprend en outre : une plateforme en nuage destinée à exploiter et à maintenir des dispositifs de l'Internet des objets dans le système de l'Internet des objets, configurée pour transmettre des informations d'interaction pour la première interaction entre le terminal et les dispositifs de l'Internet des objets actuellement en ligne ;
dans lequel les informations d'interaction comprennent : des informations d'interaction destinées à sélectionner un mode de configuration, et des informations d'interaction destinées à sélectionner le dispositif de l'Internet des objets actuellement en ligne en tant que dispositif de configuration ;
les informations de dispositif des dispositifs de l'Internet des objets actuellement en ligne sont stockées dans la plateforme en nuage.

13. Support de stockage lisible par ordinateur, dans lequel le support de stockage a stocké en son sein des programmes informatiques qui, lorsqu'ils sont exécutés par un processeur, amènent le processeur à mettre en œuvre le procédé de configuration de paramètres de réseau pour un dispositif de l'Internet des objets selon l'une quelconque des revendications 1 à 8.

14. Programme informatique qui, lorsqu'il est exécuté par un processeur, amène le processeur à mettre en œuvre toutes les étapes du procédé de configuration de paramètres de réseau pour un dispositif de l'Internet des objets selon l'une quelconque des revendications 1 à 8.
